(19) Europäisches Patentamt / European Patent Office / Office européen des brevets

(11) **EP 3 003 991 B1**

(12) **EUROPEAN PATENT SPECIFICATION**

(45) Date of publication and mention
of the grant of the patent:
**28.02.2018 Bulletin 2018/09**

(21) Application number: **14716585.6**

(22) Date of filing: **11.04.2014**

(51) Int Cl.:
*C02F 1/68* (2006.01)   *C01F 11/18* (2006.01)
*A23L 2/52* (2006.01)   *B01D 61/02* (2006.01)
*C02F 103/08* (2006.01)   *C02F 1/44* (2006.01)
*C02F 1/66* (2006.01)   *C02F 103/42* (2006.01)

(86) International application number:
**PCT/EP2014/057346**

(87) International publication number:
**WO 2014/187613 (27.11.2014 Gazette 2014/48)**

(54) **INSTALLATION FOR THE PREPARATION OF A SOLUTION OF CALCIUM HYDROGEN CARBONATE SUITABLE FOR THE REMINERALIZATION OF WATER**

ANLAGE ZUR HERSTELLUNG EINER LÖSUNG AUS CALCIUMHYDROGENCARBONAT, DAS GEEIGNET ZUR REMINERALISIERUNG VON WASSER IST

INSTALLATION POUR LA PRÉPARATION D'UNE SOLUTION DE CARBONATE D'HYDROGÈNE DE CALCIUM CONVENANT À LA REMINÉRALISATION DE L'EAU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **24.05.2013 EP 13169133
31.05.2013 US 201361829308 P**

(43) Date of publication of application:
**13.04.2016 Bulletin 2016/15**

(73) Proprietor: **Omya International AG
4665 Oftringen (CH)**

(72) Inventors:
• **POFFET, Martine
4600 Olten (CH)**
• **SKOVBY, Michael
CH-8706 Meilen (CH)**

(74) Representative: **Chwalka, Bettina
Maiwald Patentanwalts GmbH
Elisenhof
Elisenstraße 3
80335 München (DE)**

(56) References cited:
WO-A1-2010/012691     DE-A1- 19 616 647
US-A1- 2011 070 137     US-A1- 2011 217 227
US-B1- 7 771 599

**Description**

The invention relates to an installation for the preparation of a solution of calcium hydrogen carbonate and the use of such an installation for the continuous preparation of a solution of calcium hydrogen carbonate as well as the use of such an installation for the remineralization of water.

Drinking water has become scarce. Even in countries that are rich in water, not all sources and reservoirs are suitable for the production of drinking water, and many sources of today are threatened by a dramatic deterioration of the water quality. Initially feed water used for drinking purposes was mainly surface water and groundwater. However the treatment of sea water, brine, brackish waters, waste waters and contaminated effluent waters is gaining more and more importance for environmental and economic reasons.

In order to recover water from sea water or brackish water, for potable usages, several processes are known, which are of considerable importance for dry areas, coastal regions and sea islands, and such processes usually comprise distillation, electrolytic as well as osmotic or reverse osmotic processes. The water obtained by such processes is very soft and has a low pH value because of the lack of pH-buffering salts, and thus, tends to be highly reactive and, unless treated, it can create severe corrosion difficulties during its transport in conventional pipelines. Furthermore, untreated desalinated water cannot be used directly as a source of drinking water. To prevent the dissolution of undesirable substances in pipeline systems, to avoid the corrosion of water works such as pipes and valves and to make the water palatable, it is necessary to remineralize the water.

Conventional processes that are mainly used for the remineralization of water are lime dissolution by carbon dioxide and limestone bed filtration, also called calcite contactors. Other, less common remineralization processes, comprise, e.g., the addition of hydrated lime and sodium carbonate, the addition of calcium sulfate and sodium hydrogen carbonate, or the addition of calcium chloride and sodium hydrogen carbonate.

The lime process involves treatment of lime solution with $CO_2$ acidified water, wherein the following reaction is involved:

$$Ca(OH)_2 + 2\ CO_2 \rightarrow Ca^{2+} + 2\ HCO_3^-$$

As can be gathered from the above reaction scheme, two equivalents of $CO_2$ are necessary to convert one equivalent of $Ca(OH)_2$ into $Ca^{2+}$ and hydrogen carbonate for remineralization. This method is dependent on the addition of two equivalents of $CO_2$, in order to convert the alkaline hydroxide ions into the buffering species $HCO_3^-$. For the remineralization of water, a saturated calcium hydroxide solution, commonly named lime water, of 0.1-0.2 wt.-%, based on the total weight, is prepared from a lime milk (usually at most 5 wt.-%). Therefore, a saturator to produce the lime water must be used and large volumes of lime water are necessary to achieve the target level of remineralization. A further drawback of this method is that hydrated lime is corrosive and requires appropriate handling and specific equipment. Furthermore, a poorly controlled addition of hydrated lime to the soft water can lead to unwanted pH shifts due to the absence of buffering properties of lime.

The limestone bed filtration process comprises the step of passing the soft water through a bed of granular limestone dissolving the calcium carbonate in the water flow. Contacting limestone with $CO_2$ acidified water mineralizes the water according to:

$$CaCO_3 + CO_2 + H_2O \rightarrow Ca^{2+} + 2\ HCO_3^-$$

Unlike the lime process, only one equivalent of $CO_2$ is stoichiometrically necessary to convert one equivalent of $CaCO_3$ into $Ca^{2+}$ and hydrogen carbonate for remineralization. Moreover, limestone is not corrosive and due to the buffering properties of $CaCO_3$ major pH shifts are prevented.

One additional advantage of the use of calcium carbonate compared to lime is its very low carbon dioxide footprint. In order to produce one tonne of calcium carbonate 75 kg of $CO_2$ is emitted, whereas 750 kg of $CO_2$ is emitted for the production of one tonne of lime. Therefore, the use of calcium carbonate instead of lime presents some environmental benefits.

The dissolution rate of granular calcium carbonate, however, is slow and induces a sizeable footprint required for these limestone bed filtration systems.

Methods and systems for remineralization of water using lime milk or a slurry of lime are described in US 7,374,694 and EP 0 520 826. US 5,914,046, which describes a method for reducing the acidity in effluent discharges using a pulsed limestone bed.

US 7,771,599 describes a method for the remineralization of process water in a desalination system. The method sequesters carbon dioxide gas from sea water or concentrate (brine) of the desalination process via a gas transfer membrane. The sequestered carbon dioxide gas is thereafter used in the production of soluble calcium hydrogen carbonate ($Ca(HCO_3)_2$). WO 2012/020056 A1 is directed towards a process for remineralization of water comprising the steps of providing feed water, and injecting gaseous carbon dioxide and a slurry into the feed water, wherein the slurry comprises micronized calcium carbonate. WO 2010/023742 A2 describes a method and apparatus for producing potable water by post-processing (post-treating) desalinated water obtained by desalination of sea water through distillation or reverse osmosis. The method includes a carbon dioxide absorption process of excessively supplying carbon dioxide into the desalinated water to absorb the carbon dioxide, a remineralization process of passing the desalinated water into which carbon dioxide is absorbed through a limestone filter in which limestone is filled to form calcium ions and hydrogen carbonate ions, and a carbon dioxide exhaust process of supplying air into the desalinated water passed through the remineralization process to exhaust the carbon dioxide with the air to obtain the potable water. WO 2012/113957 A1 relates to a method for the remineralisation of fluids, in which final turbidity is controlled. The method includes steps comprising reagent dosing, remineralisation and filtration.

However, the described installations and processes have the disadvantage that the remineralization of water and especially the preparation of a solution of calcium hydrogen carbonate used for the remineralization of water is time dependent and therefore require large contactor tanks or reactors. US2011/0217227disclosed an installation for the preparation of calcium carbonate comprising an ion exchange membrane unit. In view of the foregoing, improving the remineralization of water still remains of interest to the skilled man. It would be especially desirable to provide an alternative or improved system for the preparation of a concentrated solution of calcium hydrogen carbonate which can be prepared in a more efficient, economic and ecologic way and especially allows the continuous preparation of a solution of calcium hydrogen carbonate (dissolved calcium carbonate in water) which can be used for the remineralization of water, while using a smaller plant footprint.

The foregoing and other objects are solved by the provision of an installation for the preparation of a solution of calcium hydrogen carbonate according to claim 1. As used herein, the term "installation" refers to a system comprising at least one dosing unit, a multiple batch system and at least one membrane filtration unit which are connected which each other such that a circular communication is ensured.

The term "in circular communication" as used in the present invention means that the corresponding units/system are coupled with each other in a loop-like system. Accordingly, a flow of gas or fluid, such as of a suspension, from one unit/system to another unit/system is possible; such flow can be achieved by way of one or more intermediate (and not specifically mentioned or described) components, apparati, devices or other articles like tubes, pipes and pumps.

The term "multiple batch" system as used in the present invention refers to a system comprising at least two process lines, i.e. one master batch line and one or more slave batch lines, that can be operated independently from each other. However, it is not excluded that the parameters of the master batch line are monitored and/or controlled, while the parameters for the one or more slave batch lines are not monitored and/or controlled.

The term "remineralization" as used in the present invention refers to the restoration of minerals in water containing only minor amounts of minerals or no minerals at all, or in an insufficient amount, in order to obtain a water that is palatable. A remineralization can be achieved by adding at least the specific calcium carbonate as raw material only to the water to be treated. Optionally, e.g., for health-related benefits to ensure the appropriate intake of some essential minerals and trace elements, further substances can be mixed into or with the calcium carbonate and then added to the water during the remineralization process. According to the national guidelines on human health and drinking water quality, the remineralized product can comprise additional minerals containing magnesium, potassium or sodium, e.g., magnesium carbonate, magnesium sulfate, potassium hydrogen carbonate, sodium hydrogen carbonate or other minerals containing essential trace elements.

The inventors of the present invention surprisingly found out that such an installation enables the skilled person to remineralize water in an efficient, economic and ecologic way. In particular, the inventors of the present invention surprisingly found out that such an installation enables the skilled person to prepare a solution of calcium hydrogen carbonate in a continuous way which can be further used for the remineralization of water. In particular, this is achieved by providing at least one dosing unit in combination with a multiple batch system comprising a master batch line and at least one slave batch line and at least one membrane filtration unit such that the single units being part of the installation are connected in circular communication. Thus, the inventive installation enables an improved preparation of a solution of calcium hydrogen carbonate.

According to another aspect of the present invention, the use of an installation, as defined herein, for the preparation of a solution of calcium hydrogen carbonate is provided. It is preferred that the installation is used for the continuous preparation of a solution of calcium hydrogen carbonate.

According to a further aspect of the present invention, the use of an installation, as defined herein, for the remineralization of water is provided. It is preferred that the water to be remineralized is selected from drinking water, recreation water such as water for swimming pools, industrial water for process applications, irrigation water, or water for aquifer or well recharge.

Advantageous embodiments of the present invention are defined in the corresponding sub-claims.

When in the following reference is made to embodiments or technical details of the inventive installation, it is to be understood that these embodiments or technical details also refer to the inventive uses of the installation as defined herein and vice versa (as far as applicable). If, for example, it is set out that the at least one dosing unit of the inventive installation is connected to a water supply and a storage container for solid material also the at least one dosing unit of the inventive uses is connected to a water supply and a storage container for solid material.

The present invention will be described with respect to particular embodiments and with reference to certain figures but the invention is not limited thereto but only by the claims. Terms as set forth hereinafter are generally to be understood in their common sense unless indicated otherwise.

Where the term "comprising" is used in the present description and claims, it does not exclude other non-specified elements of major or minor functional importance.

For the purposes of the present invention, the term "consisting of' is considered to be a embodiment of the term "comprising of'. If hereinafter a group is defined to comprise at least a certain number of embodiments, this is also to be understood to disclose a group, which preferably consists only of these embodiments.

Whenever the terms "including" or "having" are used, these terms are meant to be equivalent to "comprising" as defined above.

Where an indefinite or definite article is used when referring to a singular noun, e.g. "a", "an" or "the", this includes a plural of that noun unless something else is specifically stated.

According to one embodiment of the present invention, the at least one dosing unit is connected to a water supply and a storage container for solid material.

According to present invention, the at least one outlet of the at least one dosing unit is connected to at least one inlet of the master batch line and at least one outlet of the at least one dosing unit is connected to at least one inlet of the at least one slave batch line.

According to the present invention, at least one outlet of the master batch line is connected to at least one inlet of the at least one membrane filtration unit and at least one outlet of the at least one slave batch line is connected to at least one inlet of the at least one membrane filtration unit.

According to the present invention, at least one outlet of the at least one membrane filtration unit is connected to at least one inlet of the at least one dosing unit.

According to the present invention, the installation comprises one membrane filtration unit. It is preferred that at least one outlet of the master batch line and at least one outlet of the at least one slave batch line are independently connected to at least one inlet of the membrane filtration unit.

According to yet another embodiment of the present invention, the installation comprises at least two membrane filtration units or the total number of membrane filtration units corresponds to the total number of master batch line and slave batch lines being part of the multiple batch system. It is preferred that the master batch line and each of the at least one slave batch lines are independently connected to a different membrane filtration unit.

According to one embodiment of the present invention, the at least one gas dosing inlet of the master batch line is connected to at least one inlet of the at least one mixing unit of the master batch line and/or the at least one gas dosing inlet of the at least one slave batch line is connected to at least one inlet of the at least one mixing unit of the at least one slave batch line.

According to another embodiment of the present invention, at least one outlet of the at least one mixing unit of the master batch line is connected to at least one inlet of the at least one tank of the master batch line and/or at least one outlet of the at least one mixing unit of the at least one slave batch line is connected to at least one inlet of the at least one tank of the at least one slave batch line.

According to yet another embodiment of the present invention, at least one outlet of the at least one tank of the master batch line is connected to the at least one gas dosing inlet of the master batch line and/or at least one outlet of the at least one tank of the at least one slave batch line is connected to at least one gas dosing inlet of the at least one slave batch line.

According to one embodiment of the present invention, at least one outlet is located after the at least one mixing unit of the master batch line and at least one outlet is located after the at least one mixing unit of the at least one slave batch line. It is preferred that the at least one outlet of the master batch line and the at least one outlet of the at least one slave batch line are independently connected to at least one inlet of the at least one membrane filtration unit.

The present invention is now described in more detail:

Thus, the present invention provides an installation for the preparation of a solution of calcium hydrogen carbonate, the installation comprises in circular communication

    a) at least one dosing unit provided with at least one inlet and at least one outlet,
    b) a multiple batch system comprising

        xii) a master batch line provided with at least one inlet and at least one outlet, the master batch line comprising in circular communication

iv) at least one gas dosing inlet,
v) at least one mixing unit provided with at least one inlet and at least one outlet, and
vi) at least one tank provided with at least one inlet and at least one outlet, and

xiii) at least one slave batch line provided with at least one inlet and at least one outlet, the at least one slave batch line comprising in circular communication

iv) at least one gas dosing inlet,
v) at least one mixing unit provided with at least one inlet and at least one outlet, and
vi) at least one tank provided with at least one inlet and at least one outlet, and

c) at least one membrane filtration unit provided with at least one inlet and at least one outlet.

The installation of the present invention is applicable to the preparation of any solution of calcium hydrogen carbonate. In particular, the installation of the present invention is applicable to the continuous preparation of any solution of calcium hydrogen carbonate. Preferably, the inventive installation is applicable to the preparation of any solution of calcium hydrogen carbonate which is suitable for the remineralization of water.

For example, the solution of calcium hydrogen carbonate that can be prepared in the inventive installation is suitable for the remineralization of desalinated or naturally soft water.

The water that can be remineralized by using the solution of calcium hydrogen carbonate prepared in the inventive installation can be derived from various sources. For example, the water to be remineralized is selected from amongst drinking water, recreation water such as water for swimming pools, industrial water for process applications, irrigation water, or water for aquifer or well recharge. Additionally or alternatively, the water to be remineralized can be selected from distilled water, desalinated water such as desalinated sea water, brackish water or brine, treated wastewater or natural water such as ground water, surface water or rainfall.

The water to be remineralized by using the solution of calcium hydrogen carbonate prepared in the inventive installation can be pretreated. A pretreatment can be necessary, e.g., in case the water is derived from surface water, groundwater or rainwater. For example, to achieve the drinking water guidelines the water needs to be treated through the use of chemical or physical techniques in order to remove pollutants such as organics and undesirable minerals. For example, ozonation can be used as a first pretreatment step, followed then by coagulation, flocculation, or decantation as a second treatment step. For example, iron(III) salts such as $FeClSO_4$ or $FeCl_3$, or aluminum salts such as $AlCl_3$, $Al_2(SO_4)_3$ or polyaluminium can be used as flocculation agents. The flocculated materials can be removed from the water, e.g, by means of sand filters or multi-layered filters. Further water purification processes that can be used to pretreat the water are described, e.g., in EP 1 975 310, EP 1 982 759, EP 1 974 807, or EP 1 974 806.

If sea water or brackish water is to be remineralized by using the solution of calcium hydrogen carbonate prepared in the inventive installation, the sea water or brackish water is firstly pumped out of the sea by open ocean intakes or subsurface intakes such as wells, and then it undergoes physical pretreatments such as screening, sedimendation or sand removal processes. Depending on the required water quality, additional treatment steps such as coagulation and flocculation can be necessary in order to reduce potential fouling on the membranes. The pretreated sea water or brackish water can then be distilled, e.g., using multiple stage flash, multiple effect distillation, or membrane filtration such as ultrafiltration or reverse osmosis, to remove the remaining particulates and dissolved substances.

The water to be remineralized is at least partially contacted with micronized calcium carbonate such as to obtain an aqueous suspension of calcium carbonate that will be subsequently converted to a solution of calcium hydrogen carbonate by using the inventive installation. The obtained solution of calcium hydrogen carbonate will be further used for the remineralization of the main stream of the water to be remineralized. This is performed by diluting the concentrated solution of calcium hydrogen carbonate prepared in the inventive installation with the water to be remineralized.

Preferably, the remineralized water obtained by using the solution of calcium hydrogen carbonate prepared in the inventive installation has a calcium concentration as calcium carbonate from 15 to 200 mg/l, preferably from 30 to 150 mg/l, and most preferably from 100 to 125 mg/l, or from 15 to 100 mg/l, preferably from 20 to 80 mg/l, and most preferably from 40 to 60 mg/l.

For the purpose of the present invention, a "suspension" or "slurry" refers to a system comprising solvent, i.e. an aqueous solvent, and particles of calcium carbonate and/or calcium hydrogen carbonate, wherein at least a part of the particles of the calcium carbonate and/or calcium hydrogen carbonate are present as insoluble solids in the aqueous solvent. Said term does not exclude that a part of the calcium carbonate and/or calcium hydrogen carbonate particles is dissolved in the aqueous solvent. The term "solution" in the meaning of the present invention refers to a system comprising aqueous solvent and particles of calcium carbonate and/or calcium hydrogen carbonate, wherein the particles of the calcium carbonate and/or calcium hydrogen carbonate are dissolved in the aqueous solvent. The term "dissolved" in the meaning of the present invention refers to systems in which no discrete solid particles are observed in the aqueous solvent.

However, the term "aqueous solvent" does not exclude that the aqueous solvent comprises minor amounts of at least one water-miscible solvent.

For example, the at least one water-miscible solvent is preferably selected from methanol, ethanol, acetone, acetonitrile, tetrahydrofuran and mixtures thereof.

In one embodiment of the present invention, the aqueous solvent comprises water in an amount of at least 80 wt.-%, preferably at least 90 wt.-%, more preferably at least 95 wt.-%, even more preferably at least 99 wt.-%, based on the total weight of the aqueous solvent.

According to one embodiment of the present invention, the remineralized water obtained by using the solution of calcium hydrogen carbonate prepared in the inventive installation can be further treated with a small amount of sodium hydroxide in order to adjust the final pH of the remineralized water.

According to one embodiment of the present invention, the remineralized water obtained by using the solution of calcium hydrogen carbonate prepared in the inventive installation has a Langelier Saturation Index from -1 to 2, preferably from - 0.5 to 0.5, most preferred from -0.2 to 0.2. According to another embodiment of the present invention, the remineralized water obtained by using the solution of calcium hydrogen carbonate prepared in the inventive installation has a Silt Density Index $SDI_{15}$ below 5, preferably below 4, and most preferred below 3. According to still another embodiment of the present invention, the remineralized water obtained by using the solution of calcium hydrogen carbonate prepared in the inventive installation has a Membrane Fouling Index $MFI_{0.45}$ below 4, preferably below 2.5, most preferred below 2.

The term "Langelier Saturation Index (LSI)" as used in the present invention describes the tendency of an aqueous liquid to be scale-forming or corrosive, with a positive LSI indicating scale-forming tendencies and a negative LSI indicating a corrosive character. A balanced Langelier Saturation Index, i.e. LSI=0, therefore means that the aqueous liquid is in chemical balance. The LSI is calculated as follows:

$$LSI = pH - pH_s,$$

wherein pH is the actual pH value of the aqueous liquid and $pH_s$ is the pH value of the aqueous liquid at $CaCO_3$ saturation. The $pH_s$ can be estimated as follows:

$$pH_s = (9.3 + A + B) - (C + D),$$

wherein A is the numerical value indicator of total dissolved solids (TDS) present in the aqueous liquid, B is the numerical value indicator of temperature of the aqueous liquid in K, C is the numerical value indicator of the calcium concentration of the aqueous liquid in mg/l of $CaCO_3$, and D is the numerical value indicator of alkalinity of the aqueous liquid in mg/l of $CaCO_3$. The parameters A to D are determined using the following equations:

$$A = (\log_{10}(TDS) - 1)/10,$$

$$B = -13.12 \times \log_{10}(T + 273) + 34.55,$$

$$C = \log_{10}[Ca^{2+}] - 0.4,$$

$$D = \log_{10}(TAC),$$

wherein TDS are the total dissolved solids in mg/l, T is the temperature in °C, $[Ca^{2+}]$ is the calcium concentration of the aqueous liquid in mg/l of $CaCO_3$, and TAC is the alkalinity of the aqueous liquid in mg/l of $CaCO_3$.

The term "Silt Density Index (SDI)" as used in the present invention refers to the quantity of particulate matter in water and correlates with the fouling tendency of reverse osmosis or nanofiltration systems. The SDI can be calculated, e.g., from the rate of plugging of a 0.45 μm membrane filter when water is passed through at a constant applied water pressure of 208.6 kPa. The $SDI_{15}$ value is calculated from the rate of plugging of a 0.45 μm membrane filter when water is passed through at a constant applied water pressure of 208.6 kPa during 15 min. Typically, spiral wound reverse osmosis systems will need an SDI less than 5, and hollow fiber reverse osmosis systems will need an SDI less than 3.

The term "Modified Fouling Index (MFI)" as used in the present invention refers to the concentration of suspended matter and is a more accurate index than the SDI for predicting the tendency of a water to foul reverse osmosis or nano filtration membranes. The method that can be used for determining the MFI can be the same as for the SDI except that the volume is recorded every 30 seconds over a 15 minute filtration period. The MFI can be obtained graphically as the slope of the straight part of the curve when $t/V$ is plotted against $V$ ($t$ is the time in seconds to collect a volume of $V$ in liters). An MFI value of <1 corresponds to an SDI value of about <3 and can be considered as sufficiently low to control colloidal and particulate fouling.

It is further appreciated that the remineralized water obtained by using the solution of calcium hydrogen carbonate prepared in the inventive installation has a calcium concentration as calcium carbonate from 15 to 200 mg/l, preferably from 30 to 150 mg/l, and most preferably from 100 to 125 mg/l, or from 15 to 100 mg/l, preferably from 20 to 80 mg/l, and most preferably from 40 to 60 mg/l.

The aqueous suspension of calcium carbonate that is converted to a solution of calcium hydrogen carbonate by using the inventive installation preferably has an initial concentration of calcium carbonate in the suspension from 50 to 2,000 mg/l, preferably from 100 to 1,750 mg/l, and most preferably from 500 to 1,500 mg/l.

The calcium carbonate used for the preparation of the aqueous suspension of calcium carbonate is preferably a micronized calcium carbonate.

For the purpose of the present invention, the term "micronized" refers to a particle size in the micrometer range, e.g., a particle size from 0.1 to 100 $\mu$m. The micronized particles can be obtained by techniques based on friction, e.g., milling or grinding either under wet or dry conditions. However, it is also possible to produce the micronized particles by any other suitable method, e.g., by precipitation, rapid expansion of supercritical solutions, spray drying, classification or fractionation of natural occurring sands or muds, filtration of water, sol-gel processes, spray reaction synthesis, flame synthesis or liquid foam synthesis.

For example, the micronized calcium carbonate has a weight median particle size $d_{50}$ from 0.1 to 100 $\mu$m, from 0.5 to 50 $\mu$m, from 1 to 30 $\mu$m, preferably from 2 to 25 $\mu$m, most preferably from 5 to 25 $\mu$m, or the calcium carbonate has a weight median particle size $d_{50}$ from 1 to 50 $\mu$m, from 2 to 40 $\mu$m, preferably from 3 to 30 $\mu$m and most preferably from 10 to 25 $\mu$m.

Throughout the present document, the "particle size" of a calcium carbonate product is described by its distribution of particle sizes. The value $d_x$ represents the diameter relative to which x % by weight of the particles have diameters less than $d_x$. This means that the $d_{20}$ value is the particle size at which 20 wt.-% of all particles are smaller, and the $d_{75}$ value is the particle size at which 75 wt.-% of all particles are smaller. The $d_{50}$ value is thus the weight median particle size, i.e. 50 wt.-% of all grains are bigger or smaller than this particle size. For the purpose of the present invention, the particle size is specified as weight median particle size $d_{50}$ unless indicated otherwise. For determining the weight median particle size $d_{50}$ value for particles having a $d_{50}$ greater than 0.5 $\mu$m, a Sedigraph 5100 device from the company Micromeritics, USA can be used.

Examples of suitable calcium carbonates are ground calcium carbonate, modified calcium carbonate or precipitated calcium carbonate, or a mixture thereof.

"Ground calcium carbonate (GCC)" in the meaning of the present invention is a calcium carbonate obtained from natural sources including marble, chalk or limestone or dolomite. Calcite is a carbonate material and the most stable polymorph of calcium carbonate. The other polymorphs of calcium carbonate are the minerals aragonite and vaterite. Aragonite will change to calcite at 380-470°C, and vaterite is even less stable. Ground calcium carbonate processed through a treatment such as grinding, screening and/or fractionizing by wet and/or dry, for example, by a cyclone. It is known to the skilled person that ground calcium carbonate can inherently contain a defined concentration of magnesium, such as it is the case for dolomitic limestone.

"Precipitated calcium carbonate (PCC)" in the meaning of the present invention is a synthesized material, generally obtained by precipitation following the reaction of carbon dioxide and lime in an aqueous environment or by precipitation of a calcium and carbonate source in water or by precipitation of calcium and carbonate ions, for example $CaCl_2$ and $Na_2CO_3$, out of solution. Precipitated calcium carbonate exists in three primary crystalline forms: calcite, aragonite and vaterite, and there are many different polymorphs (crystal habits) for each of these crystalline forms. Calcite has a trigonal structure with typical crystal habits such as scalenohedral (S-PCC), rhombohedral (R-PCC), hexagonal prismatic, pinacoidal, colloidal (C-PCC), cubic, and prismatic (P-PCC). Aragonite is an orthorhombic structure with typical crystal habits of twinned hexagonal prismatic crystals, as well as a diverse assortment of thin elongated prismatic, curved bladed, steep pyramidal, chisel shaped crystals, branching tree, and coral or worm-like forms.

"Modified calcium carbonate" in the meaning of the present invention is a surface-reacted natural calcium carbonate that is obtained by a process where natural calcium carbonate is reacted with one or more acids having a $pK_a$ at 25°C of 2.5 or less and with gaseous $CO_2$ formed in situ and/or coming from an external supply, and optionally in the presence of at least one aluminum silicate and/or at least one synthetic silica and/or at least one calcium silicate and/or at least one silicate of a monovalent salt such as sodium silicate and/or potassium silicate and/or lithium silicate, and/or at least one aluminum hydroxide and/or at least one sodium and/or potassium silicate. Further details about the preparation of the surface-reacted natural calcium carbonate are disclosed in WO 00/39222 and US 2004/0020410 A1, the contents of these references herewith being included in the present patent application.

The calcium carbonate is preferably a ground calcium carbonate (GCC). It is further preferred that the calcium carbonate is a ground calcium carbonate having a particle size from 3.0 to 25.0 $\mu$m.

Additionally, the calcium carbonate can comprise an HCl insoluble content from 0.02 to 2.5 wt.-%, 0.05 to 1.5 wt.-%, or 0.1 to 0.6 wt.-%, based on the total weight of the calcium carbonate. Preferably, the HCl insoluble content of the calcium carbonate does not exceed 0.6 wt.-%, based on the total weight of the calcium carbonate. The HCl insoluble content can be, e.g., minerals such as quartz, silicate or mica.

In addition to the calcium carbonate, the aqueous suspension of calcium carbonate can comprise further micronized minerals. According to one embodiment, the aqueous suspension of calcium carbonate can comprise micronized magnesium carbonate, calcium magnesium carbonate, e.g. dolomitic limestone, calcareous dolomite or half burnt dolomite, magnesium oxide such as burnt dolomite, magnesium sulfate, potassium hydrogen carbonate, sodium hydrogen carbonate or other minerals containing essential trace elements.

Preferably, the aqueous suspension of calcium carbonate is freshly prepared. The on-site preparation of the aqueous suspension of calcium carbonate can be preferred. The reason is that when the aqueous suspension of calcium carbonate is not prepared on-site and/or freshly the addition of further agents such as stabilizers or biocides to the aqueous suspension of calcium carbonate can be required for stabilizing reasons. However, such agents can be unwanted compounds in the final remineralized water, e.g. for health concerns.

According to one embodiment of the present invention, the time period between the preparation of the aqueous suspension of calcium carbonate and the further dosing of the aqueous suspension of calcium carbonate into the multiple batch system is short enough to avoid bacterial growth in the aqueous suspension of calcium carbonate.

For example, the time period between the preparation of the aqueous suspension of calcium carbonate and the further dosing of the aqueous suspension of calcium carbonate into the multiple batch system is less than 48 hours, less than 24 hours, less than 12 hours, less than 5 hours, less than 2 hours or less than 1 hour. Preferably, the injected suspension of calcium carbonate meets the microbiological quality requirements specified by the national guidelines for drinking water.

The aqueous suspension of calcium carbonate is preferably prepared in the at least one dosing unit being part of the inventive installation. Preferably, the installation of the present invention comprises one dosing unit suitable for dosing of the aqueous suspension of calcium carbonate into the multiple batch system, i.e. the master batch line and/or the at least one slave batch line.

The at least one dosing unit of the inventive installation combines a diversity of functions. In particular, the dosing unit is capable of mixing water with calcium carbonate in an appropriate ratio such as to obtain an aqueous suspension comprising the desired initial content of undissolved calcium carbonate together with a minor amount of already dissolved calcium carbonate, e.g. calcium hydrogen carbonate, in the water phase of the aqueous suspension. Furthermore, the at least one dosing unit of the inventive installation realizes an optimal mixing of the water with the calcium carbonate such that a homogeneous distribution of particulate particles in the fluid is obtained. The mixing is preferably carried out with an inline-mixer. The inline-mixer can be rotary speed controlled.

According to one embodiment of the present invention, the at least one dosing unit is thus connected to a water supply and a storage container for solid material, i.e. calcium carbonate. It is preferred that the water is fed in the at least one dosing unit by any conventional pumping means known to the skilled person. In one embodiment of the present invention, the water is fed in the at least one dosing unit by any conventional pumping means known to the skilled person allowing an accurate dosing of a liquid, i.e. water. For example, the water is pumped, preferably under control of the water flow, in the at least one dosing unit by metering means such as a flow meter or weighing means known to the skilled person.

Additionally or alternatively, the calcium carbonate is fed from the storage container in the liquid, i.e. water, of the at least one dosing unit by any conventional feeding means known to the skilled person. In one embodiment of the present invention, the calcium carbonate is fed in the water by any conventional feeding means known to the skilled person allowing an accurate dosing of solid material, i.e. calcium carbonate. For example, the calcium carbonate is fed in the water by feeding means such as screw means or weighing means known to the skilled person. The at least one dosing unit is connected to the at least one membrane filtration unit such that the residue obtained in the at least one membrane filtration unit is circulated back into the at least one dosing unit of the inventive installation.

The term "residue" in the meaning of the present application refers to the undissolved part present in the solution of calcium hydrogen carbonate that is retained in the at least one membrane filtration unit and thus has not passed through the filter system of the at least one membrane filtration unit.

Preferably, the volume of the at least one dosing unit ranges from 1 l to 1,000 kl, preferably from 10 l to 500 kl, more preferably from 10 l to 250 kl and most preferably from 10 l to 100 kl. It is further appreciated that the volume of the at least one dosing unit is proportional to the total volume of the at least one tank provided in the master batch line and the at least one tank provided in the at least one slave batch line of the multiple batch system. That is to say the more slave batch lines in addition to the master batch line are provided in the multiple batch system of the installation the bigger the volume of the at least one dosing unit being part of the installation. It is preferred that the volume of the at least one dosing unit corresponds to the volume of the at least one tank provided in the master batch line or the at least one slave batch line of the multiple batch system. In one embodiment of the present invention, the volume of the at least one dosing unit corresponds at least to the sum of volume of the at least one tank provided in the master batch line and the at least one slave batch line of the multiple batch system.

In this regard, it is appreciated that the at least one dosing unit can be any kind of dosing unit well known to the man skilled in the art for combining and/or mixing and/or stirring and/or feeding suspensions comprising calcium carbonate.

For example, the at least one dosing unit is a dosing unit available from J.F. Knauer GmbH, Germany as Knauer Dosing station, IKA mixing system MHD 2000 or Sodimate.

One specific requirement of the at least one dosing unit is that it is capable of feeding the inventive multiple batch system, i.e. the master batch line and the at least one slave batch line, with the aqueous suspension of calcium carbonate. It is thus required that the multiple batch system is connected to the at least one dosing unit. It is thus appreciated that the master batch line of the multiple batch system is connected to the at least one dosing unit. Furthermore, it is appreciated that the at least one slave batch line of the multiple batch system is connected to the at least one dosing unit.

Accordingly, it is preferred that at least one outlet of the at least one dosing unit is connected to at least one inlet of the master batch line and at least one outlet of the at least one dosing unit is connected to at least one inlet of the at least one slave batch line. It is appreciated that at least one outlet of the at least one dosing unit is independently connected to at least one inlet of each slave batch line.

In one embodiment of the present invention, the at least one dosing unit is capable of feeding the master batch line and the at least one slave batch line of the inventive multiple batch system simultaneously with the aqueous suspension of calcium carbonate. Alternatively, the at least one dosing unit is capable of feeding the master batch line and the at least one slave batch line of the inventive multiple batch system independently from each other with the aqueous suspension of calcium carbonate.

Preferably, the at last one dosing unit and the multiple batch system, i.e. the master batch line and the at least one slave batch line, respectively, are separated by valves. In particular, it is appreciated that the at last one dosing unit and the master batch line and the at least one slave batch line, respectively, of the multiple batch system are separated by valves such that the units of the master batch line and the at least one slave batch line, respectively, are connected in circular communication, i.e. in a loop-like system. Preferably, the installation preferably comprises at least one valve located between the at least one dosing unit and the master batch line of the multiple batch system. It is further appreciated that the installation preferably comprises at least one valve located between the at least one dosing unit and the at least one slave batch line of the multiple batch system. If the multiple batch system comprises two or more slave batch lines, the system preferably comprises at least one valve located between the at least one dosing unit and each slave batch line of the multiple batch system.

In one embodiment of the present invention, the at least one dosing unit and the master batch line and the at least one slave batch line, respectively, of the multiple batch system are separated by at least one back-pressure valve. Preferably, the at least one back-pressure valve is located between the at least one dosing unit and the master batch line of the multiple batch system. Additionally or alternatively, the at least one back-pressure valve is located between the at least one dosing unit and the at least one slave batch line of the multiple batch system. If the installation comprises two or more slave batch lines, the installation preferably comprises at least one back-pressure valve located between the at least one dosing unit and each slave batch line being part of the multiple batch system.

Preferably, the feeding of the multiple batch system, i.e. the master batch line and/or the at least one slave batch line, from the at least one dosing unit is controlled by at least one flowmeter, preferably one flowmeter. In one embodiment of the present invention, the at least one flowmeter is located between the at least one dosing unit and the multiple batch system, i.e. the master batch line and the at least one slave batch line. Preferably, one flowmeter is located between the at least one dosing unit and the multiple batch system, i.e. the master batch line and the at least one slave batch line, such that the feeding of the multiple batch system, i.e. of the master batch line and the at least one slave batch line, is controlled by the flowmeter.

One specific requirement of the inventive installation is that the multiple batch system comprises a master batch line comprising in circular communication at least one gas dosing inlet, e.g. a Bronkhorst device, at least one mixing unit provided with at least one inlet and at least one outlet, and at least one tank provided with at least one inlet and at least one outlet.

In the master batch line, carbon dioxide is injected into the aqueous suspension of calcium carbonate by the at least one gas dosing inlet. Said suspension of calcium carbonate then reacts with the carbon dioxide and converts in the master batch line to calcium hydrogen carbonate present as an aqueous solution. It is appreciated that the conversion of the suspension of calcium carbonate to the solution of calcium hydrogen carbonate takes place within a specific residence time in the master batch line of the multiple batch system. For example, the residence time for the conversion of the suspension of calcium carbonate to the solution of calcium hydrogen carbonate in the master batch line of the multiple batch system is preferably below 240 min, more preferably below 120 min, still more preferably below 90 min, even more preferably below 60 min and most preferably below 45 min. For example, the residence time for the conversion of the suspension of calcium carbonate to the solution of calcium hydrogen carbonate in the master batch line of the multiple batch system can be from 1 to 240 min, more preferably from 1 to 120 min, still more preferably from 1 to 90 min, even more preferably from 2 to 60 min and most preferably from 2 to 45 min.

"Dissolved calcium carbonate" in the meaning of the present invention is understood to encompass calcium carbonate ($CaCO_3$), calcium ions ($Ca^{2+}$), hydrogen carbonate ions ($HCO_3^-$), carbonate ions ($CO_3^{2-}$), carbonic acid ($H_2CO_3$) as well as dissolved $CO_2$, depending on the amount of $CO_2$ dissolved at equilibrium conditions.

Preferably, the solution of calcium hydrogen carbonate obtained in the master batch line of the multiple batch system has a calcium concentration as calcium hydrogen carbonate from 50 to 1,000 mg/l as $CaCO_3$, preferably from 100 to 800 mg/l as $CaCO_3$, and most preferably from 500 to 700 mg/l as $CaCO_3$. It is thus appreciated that the solution of calcium hydrogen carbonate obtained in the master batch line of the multiple batch system is a concentrated solution of calcium hydrogen carbonate.

For the purpose of the present invention the term "calcium concentration" refers to the total calcium content in the solution and is specified in mg/l as $Ca^{2+}$ or as $CaCO_3$. The concentration can be measured with a titrator.

Additionally or alternatively, the solution of calcium hydrogen carbonate obtained in the master batch line of the multiple batch system has a magnesium concentration from 1 to 150 mg/l as $MgCO_3$, preferably from 2 to 100 mg/l as $MgCO_3$, and most preferably from 5 to 50 mg/l as $MgCO_3$.

According to still another embodiment of the present invention, the solution of calcium hydrogen carbonate obtained in the master batch line of the multiple batch system has a turbidity value of lower than 250 NTU, preferably of lower than 200 NTU, more preferably of lower than 150 NTU and most preferably of lower than 100 NTU. For example, the solution of calcium hydrogen carbonate obtained in the master batch line has a turbidity value of lower than 50 NTU or lower than 20 NTU.

"Turbidity" in the meaning of the present invention describes the cloudiness or haziness of a fluid caused by individual particles (suspended solids) that are generally invisible to the naked eye. The measurement of turbidity is a key test of water quality and can be carried out with a nephelometer. The units of turbidity from a calibrated nephelometer as used in the present invention are specified as Nephelometric Turbidity Units (NTU).

According to even another embodiment of the present invention, the solution of calcium hydrogen carbonate obtained in the master batch line of the multiple batch system has a conductivity value of higher than 200 $\mu$S/cm, preferably of higher than 500 $\mu$S/cm, more preferably of higher than 700 $\mu$S/cm or higher than 900 $\mu$S/cm.

"Conductivity" in the meaning of the present invention is used as an indicator of how salt-free, ion-free, or impurity-free the measured water is; the purer the water, the lower the conductivity. The conductivity can be measured with a conductivity meter and is specified in $\mu$S/cm.

The solution of calcium hydrogen carbonate is preferably prepared by introducing either: (i) a carbon dioxide generating compound or (ii) a carbon dioxide generating compound and an acid.

For the purpose of the present invention, the term "carbon dioxide generating compound" encompasses gaseous carbon dioxide, liquid carbon dioxide, solid carbon dioxide, a gas containing carbon dioxide, i.e. a mixture of at least one gas and carbon dioxide, as well as compounds releasing carbon dioxide upon thermal or chemical treatment. Preferably the carbon dioxide generating compound is a gaseous mixture of carbon dioxide and other gases such as carbon dioxide containing flue gases exhausted from industrial processes like combustion processes or calcination processes or alike, or the carbon dioxide generating compound is gaseous carbon dioxide. When a gaseous mixture of carbon dioxide and other gases is used, then the carbon dioxide is present in the range of 90 to about 99 % by volume, and preferably in the range of 95 to 99 % by volume, based on the total volume of the gaseous mixture. For example, the carbon dioxide is present in an amount of at least 97 % by volume, based on the total volume of the gaseous mixture.

The acid used in the present invention is preferably an acid selected from the group consisting of sulphuric acid, hydrochloric acid, sulphurous acid, phosphoric acid, and is preferably sulphuric acid or phosphoric acid.

The gaseous carbon dioxide can be obtained from a storage tank, in which it is held in the liquid phase. Depending on the consumption rate of carbon dioxide and the environment either cryogenic or conventionally insulated tanks can be used. The conversion of the liquid carbon dioxide into the gaseous carbon dioxide can be done using an air heated vaporizer, or an electrical or steam based vaporizing system. If necessary, the pressure of the gaseous carbon dioxide can be reduced prior to the injection step via the at least one gas dosing inlet, e.g., by using a pressure reducing valve.

The gaseous carbon dioxide can be injected into a stream of the aqueous suspension of calcium carbonate at a controlled rate by the at least one gas dosing inlet, forming a dispersion of carbon dioxide bubbles in the stream and allowing the bubbles to dissolve therein. For example, the dissolution of calcium carbonate in the liquid, i.e. water, requires a stoichiometric ratio or an excess of carbon dioxide to the total amount of $CaCO_3$ present in the aqueous suspension of calcium carbonate. If an excess of carbon dioxide is injected, the excess of carbon dioxide varies between 1 and 20 times the stoichiometric ratio regarding $CaCO_3$, preferably between 2 and 10 times the stoichiometric ratio regarding $CaCO_3$, and most preferably between 1 and 6 times the stoichiometric ratio regarding $CaCO_3$, according to the initial $CO_2$ concentration in the aqueous suspension. The dilution ratio of the concentrated calcium hydrogen carbonate solution with the water to be remineralized will have an impact on the final target pH value (excess $CO_2$) and final target calcium concentration (added $CaCO_3$) depending of the actual concentration of the mother solution (calcium hydrogen carbonate solution).

It is appreciated that the dissolution rate of calcium carbonate in the liquid phase, i.e. water, of the suspension of calcium carbonate to obtain the solution of calcium hydrogen carbonate depends on the quantity of $CO_2$ dosed but also on the temperature, pH, pressure, initial $CaCO_3$ concentration in the suspension as well as the dosing rate at which the $CO_2$ is introduced into the suspension of calcium carbonate.

According to an exemplary embodiment, the carbon dioxide is introduced into the aqueous suspension of calcium carbonate used for the preparation of the solution of calcium hydrogen carbonate at a turbulent region of the water by the at least one gas dosing inlet, wherein the turbulence can be created, e.g., by a restriction in the pipeline. For example, the carbon dioxide can be introduced into the throat of a venturi injector disposed in the pipeline connecting the single units of the master batch line of the multiple batch system. The narrowing of the cross sectional area of the pipeline at the throat of the venturi injector creates turbulent flow of sufficient energy to break up the carbon dioxide into relatively small bubbles and thereby facilitates its dissolution. According to one embodiment, the carbon dioxide is introduced under pressure into the stream of the aqueous calcium carbonate suspension in the master batch line of the multiple batch system.

Additionally or alternatively, it is appreciated that in the master batch line the carbon dioxide is injected in an aqueous suspension of calcium carbonate having a temperature of from 5 to 60 °C, preferably of from 10 to 50 °C and most preferably from 10 to 40 °C, like from 10 to 30 °C. In one embodiment of the present invention, the aqueous suspension of calcium carbonate in the master batch line of the multiple batch system has a temperature of about room temperature, i.e. from 15 to 25 °C.

In one embodiment of the present invention, the carbon dioxide is injected in an aqueous suspension of calcium carbonate in the master batch line at a pressure of 1 to 3 bars at a temperature of about room temperature, i.e. from 15 to 25 °C. For example, the carbon dioxide is injected in an aqueous suspension of calcium carbonate in the master batch line at a pressure of about 2 bars at a temperature of about room temperature, i.e. from 15 to 25 °C.

Thus, it is appreciated that the at least one gas dosing inlet of the master batch line is preferably a $CO_2$ inlet. In one embodiment of the present invention, the at least one gas dosing inlet of the master batch line is a venturi injector. Alternatively, the at least one gas dosing inlet of the master batch line is a mass flow controller with a back-pressure valve. For example, the mass flow controller is a Bronkhurst device.

In the meaning of the present patent application a venturi injector is a pump-like device that uses the venturi effect of a converging-diverging nozzle to convert the pressure energy of a motive fluid to velocity energy which creates a low pressure zone that draws in and entrains a fluid by suction. After passing through the throat of the injector, the mixed fluid expands and the velocity is reduced which results in recompressing the mixed fluids by converting velocity energy back into pressure energy. The motive fluid can be a liquid, steam or any other gas. The fluid entrained by suction can be a gas, a liquid, a slurry, or a dust-laden gas stream.

A flow control valve or other means can be used to control the rate of flow of carbon dioxide into the aqueous suspension of calcium carbonate used for the preparation of the concentrated calcium hydrogen carbonate solution. For example, a $CO_2$ dosing block and/or a turbidity, pH or conductivity in-line measuring device and/or a timer can be used to control the rate of $CO_2$ dosed into the suspension of calcium carbonate in the master batch line of the multiple batch system.

The carbon dioxide acidifies the aqueous suspension of calcium carbonate by forming the aqueous calcium hydrogen carbonate solution. The amount of carbon dioxide that is injected into the aqueous suspension of calcium carbonate will depend on the amount of carbon dioxide that is already present in the aqueous calcium carbonate suspension. The amount of carbon dioxide that is already present in said suspension, in turn, will depend, e.g., on the treatment up-stream to obtain the desalinated water used for preparing the aqueous suspension of calcium carbonate. An aqueous suspension of calcium carbonate, for example, prepared from water that has been desalinated by flash evaporation will contain another amount of carbon dioxide, and thus another pH, than water that has been desalinated by reverse osmosis. Water, for example, that has been desalinated by reverse osmosis can have a pH of about 5.2 to 6.6 and an amount of $CO_2$ of about 0.8 to 15.9 mg/l. However, according to the treatment up-stream to obtain the desalinated water the $CO_2$ concentration can reach up to 45 mg/l or even higher. It is further appreciated that the final remineralized water comprising a high $CO_2$ concentration can undergo decarbonation in order to mitigate the aggressivity of such water phase.

Preferably, the dissolution of carbon dioxide in the aqueous suspension of calcium carbonate used for the preparation of the solution of calcium hydrogen carbonate is facilitated by at least one mixing unit provided with at least one inlet and at least one outlet.

In one embodiment of the present invention, the master batch line of the multiple batch system comprises one mixing unit, preferably at least two mixing units and more preferably two mixing units. For example, the master batch line of the multiple batch system comprises at least two mixing units connected in series, preferably two mixing units connected in series.

In this regard, it is appreciated that the at least one mixing unit can be any kind of tank and/or vessel well known to the man skilled in the art for combining and/or mixing and/or stirring suspensions comprising calcium carbonate. For example, the at least one mixing unit is a vertical and/or horizontal mixing unit or a tube-shaped mixing unit. Alternatively, the at least one mixing unit can be any device used for cavitation. For example, the at least one mixing unit is a cavitation device available from Applied Cavitation Technologies, USA.

In one embodiment of the present invention, the at least one mixing unit of the master batch line being part of the multiple batch system is a vertical and/or horizontal mixing unit. Preferably, the at least one mixing unit of the master batch line is a vertical mixing unit.

For example, the at least one mixing unit is a tank and/or vessel ranging from 1 l to 1,000 kl, preferably from 10 l to 500 kl, more preferably from 10 l to 250 kl and most preferably from 10 l to 100 kl.

Preferably, the at least one mixing unit of the master batch line comprises stirring means and/or cavitation means. In one embodiment of the present invention, the at least one mixing unit comprises stirring means or cavitation means. Preferably, the at least one mixing unit comprises stirring means. For example, the stirring means are selected from mechanical stirring means such as a stirring blade typically used for agitating and mixing suspensions comprising calcium carbonate in a tank and/or vessel. Alternatively, the stirring means are selected from powder-liquid mixing means typically used for agitating and mixing more concentrated suspensions comprising calcium carbonate in a tank and/or vessel. Alternatively, if the at least one mixing unit is a tube-shaped mixing unit, the mixing unit can comprise mixing beads enabling a sufficient mixing of the calcium carbonate suspension or solution of calcium hydrogen carbonate.

In one embodiment of the present invention, the at least one mixing unit of the master batch line being part of the multiple batch system is at least one static mixer. Preferably, the at least one static mixer is characterized in that the mixer comprises a plurality of mixing chambers arranged one behind the other and adjacent to one another along a tube axis.

In this regard, it is appreciated that the at least one static mixer can be any kind of static mixer well known to the man skilled in the art for thoroughly mixing suspensions comprising calcium carbonate or solutions of calcium hydrogen carbonate.

For example, the at least one static mixer is a static mixer available from Sulzer Chemtech AG, Switzerland as Sulzer Mischer SMV™.

Alternatively, the at least one mixing unit of the master batch line being part of the multiple batch system is at least one dynamic mixer. Preferably, the dynamic mixer is characterized in that the mixer comprises mixing means such as a stirring blade or mixing beads or a propeller.

In this regard, it is appreciated that at least one dynamic mixer of the master batch line being part of the multiple batch system can be any kind of dynamic mixer well known to the man skilled in the art for thoroughly mixing suspensions comprising calcium carbonate or solutions of calcium hydrogen carbonate. In one embodiment of the present invention, the at least one dynamic mixer is a tube-shaped mixer comprising a plurality of mixing beads.

For example, the at least one dynamic mixer can be any kind of dynamic mixer well known to the skilled person for combining and/or mixing and/or stirring suspensions comprising calcium carbonate.

Depending on the concentration of the resulting aqueous solution of calcium hydrogen carbonate, the residence time in the master batch line can be from 1 to 240 min, from 1 to 120 min, from 1 to 90 min, from 2 to 60 min, or from 2 to 45 min. It is appreciated that the residence time in the master batch line of the multiple batch system can vary in a broad range and can depend e.g. on the quantity of $CO_2$ dosed in the suspension of calcium carbonate in the master batch line but also on other process parameters such as temperature, pH, pressure and the initial water quality.

For the further dissolution of calcium carbonate out of the aqueous suspension of calcium carbonate in the presence of carbon dioxide to form the solution of dissolved calcium carbonate, i.e. the solution of concentrated calcium hydrogen carbonate, the master batch line of the multiple batch system comprises at least one tank provided with at least one inlet and at least one outlet.

Preferably, the master batch line of the multiple batch system comprises one tank.

In this regard, it is appreciated that the at least one tank can be any kind of tank and/or vessel well known to the man skilled in the art for stirring suspensions comprising calcium carbonate and/or completing the conversion of suspensions comprising calcium carbonate to solutions of calcium hydrogen carbonate.

For example, the at least one tank can be a tank and/or vessel ranging from 1 l to 1,000 kl, preferably from 10 l to 500 kl, more preferably from 10 l to 250 kl and most preferably from 10 l to 100 kl.

It is further appreciated that the at least one tank of the master batch line is an open tank or closed tank well known to the skilled person. In one embodiment of the present invention, the at least one tank is a closed tank. For example, if the at least one tank of the master batch line is provided in the form of a closed tank, the closed tank is preferably operated under pressure, i.e. the stirring of suspensions comprising calcium carbonate and/or the completion of the conversion of suspensions comprising calcium carbonate to solutions of calcium hydrogen carbonate is carried out under pressure. A suitable pressure that can be adjusted within the at least one closed tank of the master batch line preferably ranges from 0.1 bar to 10 bar, more preferably from 0.2 to 5 kPa and most preferably from 0.5 to 2 kPa.

In one embodiment of the present invention, the at least one tank of the master batch line comprises a stirring device. For example, the stirring device is selected from mechanical stirring devices such as a stirring blade typically used for agitating suspensions comprising calcium carbonate or solutions of calcium hydrogen carbonate in a tank and/or vessel.

According to one embodiment of the present invention, the at least one mixing unit of the master batch line is integrated in the at least one tank of the master batch line being part of the multiple batch system. For example, if the at least one mixing unit is integrated in the at least one tank of the master batch line, the combined mixing unit/tank is preferably at least one dynamic mixer. Accordingly, if the at least one mixing unit is integrated in the at least one tank of the master batch line, i.e. a dynamic mixer, the combined mixing unit/tank is located before or after the at least one gas dosing inlet.

Alternatively, if the at least mixing unit is at least one static mixer or at least one dynamic mixer being tube-shaped, the at least one mixing unit and the at least one tank are preferably separated from each other, i.e. are not combined. Accordingly, if the at least one mixing unit is at least one static mixer or at least one dynamic mixer being tube-shaped, the at least one mixing unit is located between the at least one gas dosing inlet and the at least one tank of the master batch line.

In one embodiment of the present invention, the at least one tank of the master batch line being part of the multiple batch system comprises at least one control unit regulating the filling level of the at least one tank. In this regard, it is appreciated that the at least one control unit preferably regulates the filling level of the tank in that no calcium carbonate suspension or solution of calcium hydrogen carbonate is overflowing the tank.

For example, the at least one control unit regulates the filling level of the tank in that calcium carbonate suspension or solution of calcium hydrogen carbonate is released into the system if the tank comprises a solution of calcium hydrogen carbonate. It is preferred that the solution of calcium hydrogen carbonate is only released into the system if suitable parameters such as set residence time, temperature, pH, turbidity conductivity, calcium ion concentration etc. are met by the prepared solution of calcium hydrogen carbonate.

Accordingly, the preparation of the solution of calcium hydrogen carbonate is preferably parameter-controlled.

It is thus preferred that the master batch line of the multiple batch system being part of the inventive installation comprises means for controlling, i.e. measuring and monitoring, a parameter value of the aqueous calcium carbonate suspension or solution of calcium hydrogen carbonate such as residence time in the loop-like master batch line, conductivity, temperature, pH, total dissolved solids, turbidity, alkalinity, total hardness, calcium concentration and/or $CO_2$ concentration of the solution of dissolved calcium carbonate.

According to one embodiment of the present invention, the master batch line of the multiple batch system comprises at least one control unit monitoring the pH, turbidity, conductivity, temperature and/or calcium ion concentration (e.g. by ion sensitive electrode).

Additionally or alternatively, the master batch line of the multiple batch system comprises at least one control unit regulating the dosing quantity of $CO_2$, dosing rate of $CO_2$, residence time according to the set pH values, turbidity and/or conductivity

The master batch line of the multiple batch system being part of the inventive installation comprises the at least one gas dosing inlet, the at least one mixing unit provided with at least one inlet and at least one outlet, and the at least one tank provided with at least one inlet and at least one outlet such that a circular communication is achieved.

It is thus appreciated that the master batch line of the multiple batch system comprises the required units in that the at least one mixing unit is located between the at least one gas dosing inlet and the at least one tank. For example, the at least one mixing unit is located between the at least one gas dosing inlet and the at least one tank if the at least one mixing unit is a static mixer or a dynamic mixer being tube-shaped. Alternatively or additionally, it is appreciated that the at least one tank is located between the at least one mixing unit and the at least one gas dosing inlet. Alternatively or additionally, it is appreciated that the at least one gas dosing inlet is located between the at least one tank and the at least one mixing unit.

According to one embodiment of the present invention, the at least one mixing unit is integrated in the at least one tank of the master batch line. For example, the at least one mixing unit is integrated in the at least one tank, if the at least one mixing unit is a dynamic mixer. Accordingly, if the at least one mixing unit is integrated in the at least one tank of the master batch line, i.e. a dynamic mixer, the combined mixing unit/tank is located before or after the at least one gas dosing inlet of the master batch line.

It is thus appreciated that the at least one mixing unit of the master batch line being at least one dynamic mixer is located between the at least one gas dosing inlet and the at least one tank or, alternatively, is integrated in the at least one tank.

In other words, the single units of the master batch line are connected directly or indirectly by one or more tubes or pipes provided within, through and/or between the units such that the fluid connecting conduit (or pipeline) is extended out from an outlet of one unit and connected with an inlet of another unit.

According to one embodiment of the present invention, the at least one gas dosing inlet of the master batch line being part of the multiple batch system of the inventive installation is thus connected to at least one inlet of the at least one mixing unit of the master batch line. Additionally or alternatively, at least one outlet of the at least one mixing unit of the master batch line being part of the multiple batch system of the inventive installation is connected to at least one inlet of the at least one tank of the master batch line. Additionally or alternatively, at least one outlet of the at least one tank of the master batch line being part of the multiple batch system of the inventive installation is connected to the at least one gas dosing inlet of the master batch line.

Alternatively, if the at least one mixing unit is integrated in the at least one tank, the at least one gas dosing inlet of the master batch line being part of the multiple batch system of the inventive installation is connected to at least one inlet of the combined mixing unit/tank of the master batch line. Additionally or alternatively, at least one outlet of the combined mixing unit/tank of the master batch line being part of the multiple batch system of the inventive installation is connected to at least one inlet of the at least one gas dosing inlet of the master batch line.

For obtaining a concentrated solution of calcium hydrogen carbonate out of an aqueous suspension of calcium carbonate, it is preferred that the at least one gas dosing inlet of the master batch line is located after the at least one dosing unit.

The term "after" in the meaning of the present invention refers to the subsequent position behind another unit of the system, e.g. the at least one dosing unit and the at least one gas dosing inlet, the at least one mixing unit or the at least one tank of the master batch line and/or the at least one slave batch line. Said term does not exclude the presence of valves, control units, tubes, pipes, pumps, etc. between said units of the system unless it is indicated otherwise. For example, if it is stated that the at least one gas dosing inlet is located after the at least one dosing unit, the at least one gas dosing inlet is the subsequent unit behind the at least one dosing unit; but the term "after" does not exclude that, e.g., a back-pressure valve is located between the at least one gas dosing inlet and the at least one dosing unit.

The flow of fluid from one unit being part of the master batch line of the multiple batch system to another unit being part of the same line is preferably achieved by way of one or more intermediate (and not specifically mentioned or described) devices, pumps or apparatuses. Furthermore, such flow can or cannot be selectively interruptible such as by valves, switches, control units and/or other suitable components.

In one embodiment of the present invention, the master batch line of the multiple batch system comprises at least one pump, preferable at least two pumps and most preferably at least three pumps for directing the aqueous calcium carbonate suspension or the solution of calcium hydrogen carbonate from one unit of the master batch line to another unit being part of this line. For example, the master batch line comprises at least one pump located before the at least one mixing unit of the master batch line. Additionally or alternatively, the at least one pump is located after the at least one tank of the master batch line.

The term "before" in the meaning of the present invention refers to the preceding position ahead of another unit of the system, e.g. the at least one dosing unit and the at least one gas dosing inlet, the at least one mixing unit or the at least one tank of the master batch line and/or the at least one slave batch line. Said term does not exclude the presence of valves, control units, tubes, pipes, pumps etc. between said units of the system unless it is indicated otherwise. For example, if it is stated that a pump is located before the at least one mixing unit, the at least one pump is the preceding unit ahead of the at least one mixing unit.

In one embodiment of the present invention, the master batch line comprises one pump located before the at least one mixing unit and after the at least one tank of the master batch line.

Additionally or alternatively, the at least one pump, preferably one pump, is located before or after the at least one gas dosing inlet, e.g. the venturi injector, of the master batch line.

The at least one pump is preferably designed such that the aqueous calcium carbonate suspension or solution of calcium hydrogen carbonate is directed in a recirculating manner from the at least one gas dosing inlet, to the at least one mixing unit, to the at least one tank and further back to the at least one gas dosing inlet.

The gas dosing inlet, preferably a venturi injector, can be located before (i.e. closer to the at least one mixing unit) or after (i.e. closer to the at least one dosing unit) the at least one pump that is located within the master batch line. One advantage of the use of a venturi injector is that a gas, e.g. $CO_2$ that is produced by the power generation can be introduced in the process that can be carried out with the inventive multiple batch system.

It is further appreciated that the pumping capacity of the at least one pump (in $m^3/h$ of the sum) within the master batch line is 0.01 to 100 times the volume of the at least one tank being part of the master batch line.

Additionally or alternatively, the velocity of the flow induced by the at least one pump of the master batch line feeding the at least one mixing unit is between 0.2 and 10 m/s, preferably between 0.5 and 5 m/s, more preferably between 1 and 2 m/s and most preferably between 1 and 1.5 m/s.

If the master batch line being part of the multiple batch system of the inventive installation comprises at least one static mixer as the at least one mixing unit, the velocity of the flow induced by the at least one pump of the master batch line feeding the at least one mixing unit is preferably between 1 and 1.5 m/s.

Additionally or alternatively, the at least one pump of the master batch line is operated at a pressure from 1 to 10 bar, preferably from 2 to 8 bar and most preferably from 2 to 6 bar.

The preparation of a solution of calcium hydrogen carbonate can be monitored by detecting parameters such as residence time, conductivity, pH, temperature, calcium ion concentration, pump speed, flow pressure, $CO_2$ dosing or turbidity measured in-line during the batch process in the master batch line. For example, the master batch line being part of the multiple batch system of the inventive installation comprises at least one control unit monitoring the residence time, pump speed, flow, pressure and/or $CO_2$ dosing. Additionally or alternatively, the master batch line comprises at least one control unit monitoring the pH, turbidity, conductivity, temperature and/or calcium ion concentration (e.g. by ion sensitive electrode) of the calcium carbonate suspension or solution of calcium hydrogen carbonate.

It is thus appreciated that the master batch line being part of the multiple batch system of the inventive installation preferably comprises at least one control unit regulating the dosing quantity and/or dosing rate of $CO_2$ and/or the residence time according to the set pH values turbidity and/or conductivity. The at least one control unit regulating the dosing quantity and/or dosing rate of $CO_2$ and/or the residence time, and the at least one control unit monitoring the residence time, pump speed, flow, pressure and/or $CO_2$ dosing, and the one control unit monitoring the pH, turbidity, conductivity, temperature and/or calcium ion concentration can be operated collectively or separately.

For example, the master batch line comprises a control unit monitoring the flow which is preferably located before the at least one mixing unit and/or after the at least one gas dosing inlet. Preferably, the master batch line being part of the multiple batch system of the inventive installation comprises a control unit monitoring the pH, turbidity and conductivity, respectively, which is preferably located after the at least one mixing unit and/or before the at least one tank.

In one embodiment of the present invention, the master batch line being part of the multiple batch system of the inventive installation comprises a control unit monitoring the flow which is located before the at least one mixing unit and after the at least one gas dosing inlet and a control unit measuring the pH, turbidity and conductivity, respectively, which is located after the at least one mixing unit and before the at least one tank of the master batch line.

It is one requirement of the present invention that at least a part of the aqueous calcium carbonate suspension or solution of calcium hydrogen carbonate can be discharged from the master batch line being part of the multiple batch system of the inventive installation. The discharged calcium carbonate suspension or solution of calcium hydrogen carbonate is preferably subjected to filtration by the at least one membrane filtration unit being part of the inventive installation.

Accordingly, it is preferred that at least one outlet of the master batch line of the multiple batch system is connected to at least one inlet of the at least one membrane filtration unit.

In one embodiment of the present invention, the master batch line of the multiple batch system thus comprises at least one outlet which is located before and/or after the at least one mixing unit. The calcium carbonate suspension or solution of calcium hydrogen carbonate which is passed through the at least one membrane filtration unit of the inventive installation is preferably discharged from the master batch line through at least one outlet which is located after the at least one mixing unit. The master batch line thus preferably comprises at least one outlet which is located after the at least one mixing unit. For example, the master batch line comprises at least one outlet which is located before and after the at least one mixing unit.

The discharge of calcium carbonate suspension or solution of calcium hydrogen carbonate is preferably controlled by valves, switches, control units and/or other suitable components which are capable of selectively interrupting the flow of the calcium carbonate suspension or solution of calcium hydrogen carbonate.

Another requirement of the inventive installation is that the multiple batch system comprises at least one slave batch line comprising in circular communication at least one gas dosing inlet, at least one mixing unit provided with at least one inlet and at least one outlet, and at least one tank provided with at least one inlet and at least one outlet. The multiple batch system comprises at least one slave batch line, preferably at least two slave batch lines and most preferably at least three slave batch lines. For example, the multiple batch system comprises one slave batch line.

In each of the one or more slave batch lines, the aqueous suspension of calcium carbonate injected into each of the at least one slave batch lines of the multiple batch system by the at least one dosing unit is contacted with carbon dioxide in order to dissolve the calcium carbonate in the aqueous suspension in order to form a solution of calcium hydrogen carbonate. Said suspension of calcium carbonate is converted to a solution of calcium hydrogen carbonate in each of the at least one slave batch lines. It is appreciated that the conversion of the suspension of calcium carbonate to the solution of calcium hydrogen carbonate takes place within a specific residence time in each of the one or more slave batch lines. For example, the residence time for the conversion of the suspension of calcium carbonate to the solution of calcium hydrogen carbonate in each of the one or more slave batch lines is preferably below 240 min, more preferably below 120 min, still more preferably below 90 min, even more preferably below 60 min and most preferably below 45 min. For example, the residence time for the conversion of the suspension of calcium carbonate to the solution of calcium hydrogen carbonate in each of the one or more slave batch lines can be from 1 to 240 min, more preferably from 1 to 120 min, still more preferably from 1 to 90 min, even more preferably from 2 to 60 min and most preferably from 2 to 45 min. Preferably, the solution of calcium hydrogen carbonate obtained in each of the one or more slave batch lines of the multiple batch system has a calcium concentration as calcium hydrogen carbonate from 50 to 1,000 mg/l as $CaCO_3$, preferably from 100 to 800 mg/l as $CaCO_3$, and most preferably from 500 to 700 mg/l as $CaCO_3$. It is thus appreciated that the solution of calcium hydrogen carbonate obtained in the at least one slave batch line of the multiple batch system is a concentrated solution of calcium hydrogen carbonate.

Additionally or alternatively, the solution of calcium hydrogen carbonate obtained in each of the one or more slave batch lines has a magnesium concentration from 1 to 150 mg/l as $MgCO_3$, preferably from 2 to 100 mg/l as $MgCO_3$, and most preferably from 5 to 50 mg/l as $MgCO_3$. According to still another embodiment of the present invention, the solution of calcium hydrogen carbonate obtained in each of the one or more slave batch lines has a turbidity value of lower than 250 NTU, preferably of lower than 200 NTU, more preferably of lower than 150 and most preferably of lower than 100 NTU. For example, the solution of calcium hydrogen carbonate obtained in each of the one or more slave batch lines has a turbidity value of lower than 50 NTU or lower than 20 NTU.

According to even another embodiment of the present invention, the solution of calcium hydrogen carbonate obtained in each of the one or more slave batch lines of the multiple batch system has a conductivity value of higher than 200 μS/cm, preferably of higher than 500 μS/cm, more preferably of higher than 700 μS/cm or higher than 900 μS/cm.

The solution of calcium hydrogen carbonate is preferably prepared in the at least one slave batch line by introducing either: (i) a carbon dioxide generating compound or (ii) a carbon dioxide generating compound and an acid.

In one embodiment of the present invention, the carbon dioxide generating compound is a gaseous mixture of carbon dioxide and other gases such as carbon dioxide containing flue gases exhausted from industrial processes like combustion processes or calcination processes or alike, or the carbon dioxide generating compound is gaseous carbon dioxide. When a gaseous mixture of carbon dioxide and other gases is used, then the carbon dioxide is present in the range of 90 to about 99 % by volume, and preferably in the range of 95 to 99 % by volume, based on the total volume of the gaseous mixture. For example, the carbon dioxide is present in an amount of at least 97 % by volume, based on the total volume of the gaseous mixture.

The acid used in the present invention is preferably an acid selected from the group consisting of sulphuric acid, hydrochloric acid, sulphurous acid, phosphoric acid, and is preferably sulphuric acid or phosphoric acid.

The gaseous carbon dioxide used in the at least one slave batch line of the multiple batch system can be obtained from a storage tank, in which it is held in the liquid phase. Depending on the consumption rate of carbon dioxide and the environment either cryogenic or conventionally insulated tanks can be used. The conversion of the liquid carbon dioxide into the gaseous carbon dioxide can be done using an air heated vaporizer, or an electrical or steam based vaporizing system. If necessary, the pressure of the gaseous carbon dioxide can be reduced prior to the injection step via the at least one gas dosing inlet, e.g., by using a pressure reducing valve.

The gaseous carbon dioxide can be injected into a stream of the aqueous suspension of calcium carbonate in the at least one slave batch line of the multiple batch system at a controlled rate by at least one gas dosing inlet located at the at least one slave batch line, forming a dispersion of carbon dioxide bubbles in the stream and allowing the bubbles to dissolve therein. For example, the dissolution of calcium carbonate in the liquid, i.e. water, requires a stoichiometric ratio or an excess of carbon dioxide to the total amount of $CaCO_3$ present in the aqueous suspension of calcium carbonate. If an excess of carbon dioxide is used, the excess of carbon dioxide varies between 1 and 20 times the stoichiometric ratio regarding $CaCO_3$, preferably between 2 and 10 times the stoichiometric ratio regarding $CaCO_3$ and most preferably between 1 and 6 times the stoichiometric ratio regarding $CaCO_3$, according to the initial $CO_2$ concentration in the aqueous suspension. The dilution ratio of the concentrated calcium hydrogen carbonate solution with the water to be remineralized will impact the final target pH value (excess $CO_2$) and final target calcium concentration (added $CaCO_3$) depending on the actual concentration of the mother solution (calcium hydrogen carbonate solution).

It is appreciated that the dissolution rate of calcium carbonate in the liquid phase, i.e. water, of the suspension of calcium carbonate in the at least one slave batch line to obtain the solution of calcium hydrogen carbonate depends on the quantity of $CO_2$ dosed but also on the temperature, pH, pressure, initial $CaCO_3$ concentration in the suspension as well as the dosing rate at which the $CO_2$ is introduced into the suspension of calcium carbonate in the at least one slave batch line of the multiple batch system.

According to an exemplary embodiment, the carbon dioxide is introduced into the aqueous suspension of calcium carbonate used for the preparation of the solution of calcium hydrogen carbonate, i.e. in each of the one or more slave batch lines of the multiple batch system, at a turbulent region of the water by at least one gas dosing inlet located at each of the one or more slave batch lines, wherein the turbulence can be created, e.g., by a restriction in the pipeline. For example, the carbon dioxide can be introduced into the throat of a venture injector disposed in the pipeline connecting the single units of the at least one slave batch line of the multiple batch system. The narrowing of the cross sectional area of the pipeline at the throat of the venturi injector creates turbulent flow of sufficient energy to break up the carbon dioxide into relatively small bubbles and thereby facilitates its dissolution in the at least one slave batch line. According to one embodiment, the carbon dioxide is introduced under pressure into the stream of the aqueous calcium carbonate suspension in the at least one slave batch line of the multiple batch system.

Additionally or alternatively, it is appreciated that in the at least one slave batch line the carbon dioxide is injected in an aqueous suspension of calcium carbonate having a temperature of from 5 to 60 °C, preferably of from 10 to 50 °C and most preferably from 10 to 40 °C, like from 10 to 30 °C. In one embodiment of the present invention, the aqueous suspension of calcium carbonate in the at least one slave batch line of the multiple batch system has a temperature of about room temperature, i.e. from 15 to 25 °C.

In one embodiment of the present invention, the carbon dioxide is injected in an aqueous suspension of calcium carbonate in the at least one slave batch line at a pressure of 1 to 3 bars at a temperature of about room temperature, i.e. from 15 to 25 °C. For example, the carbon dioxide is injected in an aqueous suspension of calcium carbonate in the at least one slave batch line at a pressure of about 2 bars at a temperature of about room temperature, i.e. from 15 to 25 °C.

Thus, it is appreciated that the at least one gas dosing inlet of the at least one slave batch line of the multiple batch system is preferably a $CO_2$ inlet. In one embodiment of the present invention, the at least one gas dosing inlet of the at least one slave batch line is a venturi injector. Alternatively, the at least one gas dosing inlet of the at least one slave batch line is a mass flow controller with a back-pressure valve. For example, the mass flow controller with a back-pressure valve is a Bronkhurst device.

A flow control valve or other means can be used to control the rate of flow of carbon dioxide into the aqueous suspension of calcium carbonate used for the preparation of the concentrated calcium hydrogen carbonate solution in the at least one slave batch line. For example, a $CO_2$ dosing block and/or a turbidity, pH or conductivity in-line measuring device and/or a timer can be used to control the rate of $CO_2$ dosed into the suspension of calcium carbonate in the at least one slave batch line of the multiple batch system.

Preferably, in each of the one or more slave batch lines of the multiple batch system the dissolution of carbon dioxide in the aqueous suspension of calcium carbonate used for the preparation of the solution of calcium hydrogen carbonate is facilitated by at least one mixing unit provided with at least one inlet and at least one outlet.

In one embodiment of the present invention, each of the one or more slave batch lines of the multiple batch system comprises one mixing unit, preferably at least two mixing units and more preferably two mixing units. For example, each of the one or more slave batch lines comprises at least two mixing units connected in series, preferably two mixing units connected in series.

In this regard, it is appreciated that the at least one mixing unit of the at least one slave batch line being part of the multiple batch system of the inventive installation can be any kind of tank and/or vessel well known to the man skilled in the art for combining and/or mixing and/or stirring suspensions comprising calcium carbonate. For example, the at least one mixing unit is vertical and/or horizontal mixing unit or a tube-shaped mixing unit. Alternatively, the at least one mixing unit is any device used for cavitation. For example, the at least one mixing unit is a cavitation device available from Applied Cavitation Technologies, USA.

In one embodiment of the present invention, the at least one mixing unit of the at least one slave batch line of the multiple batch system is a vertical and/or horizontal mixing unit. Preferably, the at least one mixing unit of the at least one slave batch line of the multiple batch system is a vertical mixing unit.

For example, the at least one mixing unit of the at least one slave batch line of the multiple batch system is a tank and/or vessel ranging from 1 l to 1,000 kl, preferably from 10 l to 500 kl, more preferably from 10 l to 250 kl and most preferably from 10 l to 100 kl.

Preferably, the at least one mixing unit of the at least one slave batch line of the multiple batch system comprises stirring means and/or cavitation means. In one embodiment of the present invention, the at least one mixing unit comprises stirring means or cavitation means. Preferably, the at least one mixing unit comprises stirring means. For example, the stirring means are selected from mechanical stirring means such as a stirring blade typically used for agitating and mixing suspensions comprising calcium carbonate in a tank and/or vessel. Alternatively, the stirring means are selected from powder-liquid mixing means typically used for agitating and mixing more concentrated suspensions comprising calcium carbonate in a tank and/or vessel. Alternatively, if the at least one mixing unit is a tube-shaped mixing unit, the mixing unit can comprise mixing beads enabling a sufficient mixing of the calcium carbonate suspension or solution of calcium hydrogen carbonate.

In one embodiment of the present invention, the at least one mixing unit of the at least one slave batch line is at least one static mixer. Preferably, the at least one static mixer is characterized in that the mixer comprises a plurality of mixing chambers arranged one behind the other and adjacent to one another along a tube axis.

In this regard, it is appreciated that the at least one static mixer of the at least one slave batch line being part of the multiple batch system of the inventive installation can be any kind of static mixer well known to the man skilled in the art for thoroughly mixing suspensions comprising calcium carbonate or solutions of calcium hydrogen carbonate.

For example, the at least one static mixer of the at least one slave batch line of the multiple batch system is a static mixer available from Sulzer Chemtech AG, Switzerland as Sulzer Mischer SMV™.

Alternatively, the at least one mixing unit of the at least one slave batch line of the multiple batch system is at least one dynamic mixer. Preferably, the dynamic mixer is characterized in that the mixer comprises mixing means such as a stirring blade or mixing beads or a propeller.

In this regard, it is appreciated that at least one dynamic mixer of the at least one slave batch line being part of the multiple batch system can be any kind of dynamic mixer well known to the man skilled in the art for thoroughly mixing suspensions comprising calcium carbonate or solutions of calcium hydrogen carbonate. In one embodiment of the present invention, the at least one dynamic mixer of the at least one slave batch line is a tube-shaped mixer comprising a plurality of mixing beads.

For example, the at least one dynamic mixer of the at least one slave batch line being part of the multiple batch system can be any kind of dynamic mixer well known to the skilled person for combining and/or mixing and/or stirring suspensions comprising calcium carbonate.

Depending on the concentration of the resulting aqueous solution of calcium hydrogen carbonate in the at least one slave batch line of the multiple batch system, the residence time in the at least one slave batch line can be from 1 to 240 min, from 1 to 120 min, from 1 to 90 min, from 2 to 60 min, or from 2 to 45 min. It is appreciated that the residence time in the at least one slave batch line of the multiple batch system can vary in a broad range and can depend e.g. on the quantity of $CO_2$ dosed in the suspension of calcium carbonate in the at least one slave batch line.

For the further dissolution of calcium carbonate out of the aqueous suspension of calcium carbonate in the presence of carbon dioxide to form the solution of calcium hydrogen carbonate, the at least one slave batch line being part of the multiple batch system comprises at least one tank provided with at least one inlet and at least one outlet.

Preferably, the at least one slave batch line of the multiple batch system comprises one tank.

In this regard, it is appreciated that the at least one tank of the at least one slave batch line can be any kind of tank and/or vessel well known to the man skilled in the art for stirring suspensions comprising calcium carbonate and/or completing the conversion of suspensions comprising calcium carbonate to solutions of calcium hydrogen carbonate.

For example, the at least one tank of the at least one slave batch line being part of the multiple batch system can be a tank and/or vessel ranging from 1 l to 1,000 kl, preferably from 10 l to 500 kl, more preferably from 10 l to 250 kl and most preferably from 10 l to 100 kl.

It is further appreciated that the at least one tank of the at least one slave batch line being part of the multiple batch system is an open tank or closed tank well known to the skilled person. In one embodiment of the present invention, the at least one tank of the at least one slave batch line is a closed tank. For example, if the at least one tank of the at least one slave batch line is provided in the form of a closed tank, the closed tank is preferably operated under pressure, i.e. the stirring of the suspension comprising calcium carbonate and/or the completion of the conversion of the suspension comprising calcium carbonate to a solution of calcium hydrogen carbonate is carried out under pressure. A suitable pressure that can be adjusted in the at least one closed tank of the at least one slave batch line ranges from 0.1 to 10 kPa, preferably from 0.2 to 5 kPa and most preferably from 0.5 to 2 kPa.

In one embodiment of the present invention, the at least one tank of the at least one slave batch line comprises a stirring device. For example, the stirring device is selected from mechanical stirring devices such as a stirring blade typically used for agitating suspensions comprising calcium carbonate or solutions of calcium hydrogen carbonate in a tank and/or vessel.

According to one embodiment of the present invention, the at least one mixing unit of the at least one slave batch line is integrated in the at least one tank of the at least one slave batch line. For example, if the at least one mixing unit is integrated in the at least one tank of the at least one slave batch line, the combined mixing unit/tank is preferably at least one dynamic mixer. Accordingly, if the at least one mixing unit is integrated in the at least one tank, i.e. a dynamic mixer, the combined mixing unit/tank is located before or after the at least one gas dosing inlet of the at least one slave batch line.

Alternatively, if the at least mixing unit of the at least one slave batch line being part of the multiple batch system of the inventive installation is at least one static mixer or at least one dynamic mixer being tube-shaped, the at least one mixing unit and the at least one tank are preferably separated from each other, i.e. are not combined. Accordingly, if the at least one mixing unit of the at least one slave batch line is at least one static mixer or at least one dynamic mixer being tube-shaped, the at least one mixing unit is located between the at least one gas dosing inlet and the at least one tank of the at least one slave batch line.

In one embodiment of the present invention, the at least one tank of the at least one slave batch line being part of the multiple batch system comprises at least one control unit regulating the filling level of the at least one tank of the at least one slave batch line. In this regard, it is appreciated that the at least one control unit regulates the filling level of the at least one tank of the at least one slave batch line in that no calcium carbonate suspension or solution of calcium hydrogen carbonate is overflowing the at least one tank.

For example, the at least one control unit of the at least one slave batch line being part of the multiple batch system regulates the filling level of the corresponding at least one tank in that calcium carbonate suspension or solution of calcium hydrogen carbonate is released into the system if the tank comprises a solution of calcium hydrogen carbonate.

Each of the one or more slave batch lines being part of the multiple batch system of the inventive installation comprises the at least one gas dosing inlet, the at least one mixing unit provided with at least one inlet and at least one outlet, and the at least one tank provided with at least one inlet and at least one outlet such that a circular communication is achieved.

It is thus appreciated that the at least one slave batch line being part of the multiple batch system comprises the required units in that the at least one mixing unit is located between the at least one gas dosing inlet and the at least one tank. For example, the at least one mixing unit of the at least one slave batch line is located between the at least one gas dosing inlet and the at least one tank if the at least one mixing unit is a static mixer or a dynamic mixer being tube-shaped. Alternatively or additionally, it is appreciated that the at least one tank of the at least one slave batch line is located between the at least one mixing unit and the at least one gas dosing inlet. Alternatively or additionally, it is appreciated that the at least one gas dosing inlet of the at least one slave batch line is located between the at least one tank and the at least one mixing unit.

According to one embodiment of the present invention, the at least one mixing unit is integrated in the at least one tank of the at least one slave batch line. For example, the at least one mixing unit is integrated in the at least one tank, if the at least one mixing unit is a dynamic mixer. Accordingly, if the at least one mixing unit is integrated in the at least one tank, i.e. a dynamic mixer, the combined mixing unit/tank is located before or after the at least one gas dosing inlet of the at least one slave batch line.

It is thus appreciated that the at least one mixing unit of the at least one slave batch line being at least one dynamic mixer is located between the at least one gas dosing inlet and the at least one tank or, alternatively, is integrated in the at least one tank of the at least one slave batch line.

In other words, the single units of the at least one slave batch line being part of the multiple batch system are connected directly or indirectly by one or more tubes or pipes provided within, through and/or between the units such that the fluid connecting conduit (or pipeline) is extended out from an outlet of one unit and connected with an inlet of another unit.

According to one embodiment of the present invention, the at least one gas dosing inlet of the at least one slave batch line is thus connected to at least one inlet of the at least one mixing unit of the at least one slave batch line being part of the multiple batch system. Additionally or alternatively, at least one outlet of the at least one mixing unit of the at least one slave batch line is connected to at least one inlet of the at least one tank of the at least one slave batch line being part of the multiple batch system. Additionally or alternatively, at least one outlet of the at least one tank of the at least one slave batch line is connected to the at least one gas dosing inlet of the at least one slave batch line being part of the multiple batch system.

Alternatively, if the at least one mixing unit of the at least one slave batch line being part of the multiple batch system is integrated in the at least one tank, the at least one gas dosing inlet of the at least one slave batch line is connected to at least one inlet of the combined mixing unit/tank of the at least one slave batch line being part of the multiple batch system. Additionally or alternatively, at least one outlet of the combined mixing unit/tank of the master batch line is connected to at least one inlet of the at least one gas dosing inlet of the at least one slave batch line being part of the multiple batch system.

For obtaining a concentrated solution of calcium hydrogen carbonate out of an aqueous suspension of calcium carbonate, it is preferred that the at least one gas dosing inlet of the at least one slave batch line is located after the at least one dosing unit

The flow of fluid from one unit being part of the slave batch line of the multiple batch system to another unit being part of the same slave batch line can be achieved by way of one or more intermediate (and not specifically mentioned or described) devices, pumps or apparati. Furthermore, such flow can or cannot be selectively interruptible such as by valves, switches, control units and/or other suitable components.

In one embodiment of the present invention, the at least one slave batch line being part of the multiple batch system comprises at least one pump, preferable at least two pumps and most preferably at least three pumps for directing the aqueous calcium carbonate suspension or the solution of calcium hydrogen carbonate from one unit of the at least one slave batch line to another unit being part of the same slave batch line. For example, the at least one slave batch line comprises at least one pump located before the at least one mixing unit of the at least one slave batch line. Additionally or alternatively, the at least one pump is located after the at least one tank of the at least one slave batch line being part of the multiple batch system.

In one embodiment of the present invention, the at least one slave batch line comprises one pump located before the at least one mixing unit and after the at least one tank of the at least one slave batch line being part of the multiple batch system.

Additionally or alternatively, the at least one pump, preferably one pump, is located before or after the at least one gas dosing inlet, e.g. the venturi injector, of the at least one slave batch line being part of the multiple batch system.

The at least one pump is preferably designed such that the aqueous calcium carbonate suspension or solution of calcium hydrogen carbonate is directed in a recirculating manner from the at least one gas dosing inlet, to the at least one mixing unit, to the at least one tank and further back to the at least one gas dosing inlet of the at least one slave batch line.

The at least one gas dosing inlet, preferably a venturi injector, can be located before (i.e. closer to the at least one mixing unit) or after (i.e. closer to the at least one dosing unit) the at least one pump that is located within the at least one slave batch line being part of the multiple batch system.

It is further appreciated that the pumping capacity of the at least one pump (in m³/h of the sum) within the at least one slave batch line is 0.01 to 100 times the volume of the at least one tank being part of the at least one slave batch line being part of the multiple batch system.

Additionally or alternatively, the velocity of the flow induced by the at least one pump of the at least one slave batch line feeding the at least one mixing unit is between 0.2 and 10 m/s, preferably between 0.5 and 5 m/s, more preferably between 1 and 2 m/s and most preferably between 1 and 1.5 m/s.

If the at least one slave batch line being part of the multiple batch system comprises at least one static mixer as the at least one mixing unit, the velocity of the flow induced by the at least one pump of the at least one slave batch line feeding the at least one mixing unit is preferably between 1 and 1.5 m/s.

Additionally or alternatively, the at least one pump of the at least one slave batch line is operated at a pressure from 1 to 10 bar, preferably from 2 to 8 bar and most preferably from 2 to 6 bar.

The preparation of a solution of calcium hydrogen carbonate can be monitored by detecting parameters such as the residence time, pump speed, flow, pressure and/or $CO_2$ dosing.

It is thus appreciated that the at least one slave batch line of the multiple batch system preferably comprises at least one control unit monitoring the residence time, pump speed, flow, pressure and/or $CO_2$ dosing that can be operated collectively or separately.

It is one requirement of the present invention that at least a part of the aqueous calcium carbonate suspension or solution of calcium hydrogen carbonate can be discharged from the at least one slave batch line being part of the multiple batch system of the inventive installation. The discharged calcium carbonate suspension or solution of calcium hydrogen carbonate is preferably subjected to filtration by the at least one membrane filtration unit being part of the inventive installation.

Accordingly, it is preferred that at least one outlet of the at least one slave batch line of the multiple batch system is connected to at least one inlet of the at least one membrane filtration unit.

In one embodiment of the present invention, the at least one slave batch line of the multiple batch system thus comprises at least one outlet which is located before and/or after the at least one mixing unit. The calcium carbonate suspension or solution of calcium hydrogen carbonate which is passed through the at least one membrane filtration unit of the inventive installation is preferably discharged from the at least one slave batch line through at least one outlet which is located after the at least one mixing unit. The at least one slave batch line thus preferably comprises at least one outlet which is located after the at least one mixing unit. For example, the at least one slave batch line comprises at least one outlet which is located before and after the at least one mixing unit.

The discharge of calcium carbonate suspension or solution of calcium hydrogen carbonate from the at least one slave batch line is preferably controlled by valves, switches, control units and/or other suitable components which are capable of selectively interrupting the flow of the calcium carbonate suspension or solution of calcium hydrogen carbonate.

It is appreciated that the aqueous solution of calcium hydrogen carbonate is discharged from the master batch line and/or the at least one slave batch line and filtered by a membrane filtration unit in order to further reduce the turbidity level of the solution of calcium hydrogen carbonate produced in the multiple batch system of the installation, i.e. in the master batch line and/or each of the at least one slave batch lines.

It is thus one requirement of the present invention that the installation comprises at least one membrane filtration unit provided with at least one inlet and at least one outlet. Accordingly, it is appreciated that at least one outlet of the master batch line and at least one outlet of the at least one slave batch line are independently connected to at least one inlet of the at least one membrane filtration unit.

In one embodiment of the present invention, the master batch line and each of the at least one slave batch lines are connected to the same membrane filtration unit, i.e. the installation comprises one membrane filtration unit. In one embodiment of the present invention, the master batch line and each of the at least one slave batch lines of the multiple batch system are capable of feeding the one membrane filtration unit of the inventive installation simultaneously with the solution of calcium hydrogen carbonate. Alternatively, the master batch line and each of the at least one slave batch lines of the multiple batch system are capable of feeding the one membrane filtration unit of the inventive installation independently from each other with the solution of calcium hydrogen carbonate.

Accordingly, it is appreciated that at least one outlet of the master batch line and at least one outlet of each slave batch line are independently connected to at least one inlet of the one membrane filtration unit. Preferably, at least one outlet of the master batch line and at least one outlet of each slave batch line are independently connected to the same inlet of the membrane filtration unit, i.e. the membrane filtration unit comprises one inlet.

If the inventive installation comprises one membrane filtration unit, a storage tank, preferably one storage tank, can be located between the master batch line and the membrane filtration unit and/or between the at least one slave batch line and the membrane filtration unit. For example, one storage tank is located between the master batch line and the membrane filtration unit or between the at least one slave batch line and the membrane filtration unit. Alternatively, one storage tank is located between the master batch line and the membrane filtration unit and between the at least one slave batch line and the membrane filtration unit. It is thus appreciated that the master batch line and each of the at least one slave batch lines are independently connected to the same storage tank.

Accordingly, at least one outlet of the master batch line and at least one outlet of the at least one slave batch line are independently connected to at least one inlet of the storage tank. Additionally, at least one outlet of the storage tank is connected to at least one inlet of the membrane filtration unit.

In this regard, it is appreciated that the storage tank can be any kind of tank and/or vessel well known to the man skilled in the art for storing and collecting of solutions of calcium hydrogen carbonate. For example, the storage tank can be a tank and/or vessel ranging from 1 l to 1,000 kl, preferably from 10 l to 500 kl, more preferably from 101 to 250 kl and most preferably from 101 to 100 kl.

It is further appreciated that the storage tank can be an open storage tank or closed storage tank well known to the skilled person. In one embodiment of the present invention, the storage tank is a closed storage tank. For example, if the storage tank is provided in the form of a closed storage tank, the closed storage tank can be operated under atmospheric pressure or above atmospheric pressure. In one embodiment of the present invention, the closed storage tank is preferably operated under pressure, i.e. the storing and collecting of the solutions of calcium hydrogen carbonate is carried out above atmospheric pressure. A suitable pressure that can be adjusted within the at least one closed storage tank preferably ranges from 0.1 bar to 10 bar, more preferably from 0.2 to 5 kPa and most preferably from 0.5 to 2 kPa.

In one embodiment of the present invention, the storage tank comprises at least one control unit regulating the filling level within the storage tank. In this regard, it is appreciated that the at least one control unit regulates the filling level within the storage tank in that no solution of calcium hydrogen carbonate is overflowing the storage tank.

Alternatively, the installation comprises at least two membrane filtration units. For example, the installation comprises two membrane filtration units, i.e. one membrane filtration unit being connected to the master batch line and one membrane filtration unit being connected to the one or more slave batch lines.

In one embodiment of the present invention, the total number of membrane filtration units being part of the inventive installation corresponds to the total number of master batch line and slave batch lines being part of the multiple batch system. Accordingly, it is appreciated that the master batch line and each of the one or more slave batch lines are independently connected to a different membrane filtration unit.

As already mentioned above, the discharge of solution of calcium hydrogen carbonate from the master batch line and the at least one slave batch line, respectively is preferably controlled by valves.

Preferably, the installation thus comprises at least one valve located between the at least one membrane filtration unit and the multiple batch system, i.e. the master batch line and the at least one slave batch line. For example, if the installation comprises one membrane filtration unit, the installation comprises one or two valves, preferably one valve, located between the one membrane filtration unit and the multiple batch system. If a storage tank is located between the multiple batch system, i.e. the master batch line and the at least one slave batch line, and the one membrane filtration unit, the installation preferably comprises two valves, i.e. one valve located before the storage tank and one valve located after the storage tank.

Alternatively, if the installation comprises two or more membrane filtration units, at least one valve is located between the master batch line and each at least one slave batch line, respectively, and each membrane filtration unit.

In one embodiment of the present invention, the at least one valve located between the at least one membrane filtration unit and the multiple batch system, i.e. the master batch line and the at least one slave batch line, is at least one back-pressure valve.

In one embodiment of the present invention, at least one pump is located between the master batch line and the at least one membrane filtration unit and/or at least one pump is located between the at least one slave batch line, preferably between each slave batch line, and the at least one membrane filtration unit. For example, if the inventive installation comprises one membrane filtration unit and a storage tank, at least one pump, preferably one pump, is located between the storage tank and the one membrane filtration unit for directing the solution of calcium hydrogen carbonate to the membrane filtration unit.

The at least one membrane filtration unit being part of the installation is a cross flow membrane micro filtration device and/or a cross flow membrane ultrafiltration device can be used.

It is appreciated that there is a pressure difference between the inside of the membrane filtering unit and the surrounding environment so that suspended particles are separated from the suspension/solution and a clear solution is obtained. Preferably, the pressure inside the membrane filtering unit is higher than the pressure of the surrounding environment.

A micro filtration membrane is a membrane having a pore size between 0.1 and 10 $\mu$m and is typically used to separate suspended particles from suspension. Microfiltration membranes can be of ceramic, polymer, or other synthetic materials. Preferably, said membranes have backpulse capability, i.e., a reverse flow of the filtrate by pressure through the membrane to the concentrated side of the aqueous suspension removes buildup of contaminants which tend to reduce the flow rate of the membrane. In contrast thereto, an ultrafiltration membrane is a membrane having a pore size between 0.001 and 0.1 $\mu$m and is used to separate emulsions, proteins and macromolecules from suspension. The materials of construction are typically the same as for microfiltration membranes. Ultrafiltration membranes are either backpulsed as described above, or backwashed by closing a filtrate valve for a period of time.

For example, the at least one membrane filtration unit is a cross flow membrane filtration device. In one embodiment of the present invention, the at least one membrane filtration unit is a cross flow membrane microfiltration device. Additionally or alternatively, the at least one membrane filtration unit is a cross flow membrane ultrafiltration device. For example, the at least one membrane filtration unit is a cross flow membrane ultrafiltration device.

Cross flow membrane filtration devices are known to the skilled man. One cross flow membrane filtration device that is suitable for the inventive installation includes the cross flow membrane filtration device available from Microdyn-Nadir GMBH, Germany as Mycrodyn Modul CMB 150 or the ultrafiltration membrane 2.5" dizzer module from Inge (UF Module dizzer 2514P 0.5).

It is appreciated that the at least one membrane filtration unit comprises at least one platy filter and/or tube filter and/or capillary filter membrane. Preferably, the at least one membrane filtration unit comprises at least one tube filter membrane. If the at least one membrane filtration unit comprises at least one tube filter membrane, the tube filter membrane preferably has an inner diameter of the tube of 0.01 mm to 25 mm, more preferably of 0.1 mm to 10 mm and most preferably of 0.1 to 7.5 mm. For example, the tube filter membrane has an inner diameter of the tube of 1 mm to 7.5 mm and preferably of 2.5 mm to 7.5 mm.

In one embodiment of the present invention, the at least one membrane filtration unit comprises a capillary filter membrane having a plurality of capillaries. If the at least one membrane filtration unit is a capillary filter membrane having a plurality of capillaries, the capillaries preferably have an inner diameter of 0.01 mm to 25 mm, more preferably of 0.1 mm to 10 mm and most preferably of 0.1 to 7.5 mm. For example, the capillaries of the at least one membrane filtration unit have an inner diameter of 0.5 mm to 5 mm and preferably of 0.5 mm to 2.5 mm.

If the at least one membrane filtration unit is a capillary filter membrane having a plurality of capillaries, the membrane filtration unit preferably comprises from 2 to 15 capillaries, preferably from 4 to 12 and most preferably from 5 to 10 capillaries. For example, the at least one membrane filtration unit comprises 7 capillaries.

Capillary filter membranes are preferred as they provide excellent flow conditions for the separation of solids at relatively low operating pressures and a high recirculation flow rate, as turbulent flow is produced at the membrane surface.

In one embodiment of the present invention, capillary filter membrane comprises at least one membrane having a pore size of between 0.01 $\mu$m and 10 $\mu$m, preferably between 0.05 and 5 $\mu$m, more preferably between 0.1 and 2 $\mu$m and most preferably between 0.5 and 2 $\mu$m.

Membrane filtration units are known to the skilled man. One membrane filtration unit that can be suitable for the inventive multiple batch system includes the dizzer® Modules available from Inge watertechnologies, Germany.

It is further appreciated that the speed of flow across the at least one membrane of the cross flow membrane filtration device is between 0.1 m/s and 10 m/s, preferably between 0.5 m/s and 5 m/s and most preferably between 1 m/s and 4 m/s. Additionally or alternatively, the pressure at the inlet of the cross flow membrane filtration device is between 0 bar and 30 bar, preferably between 0.2 bar and 10 bar and most preferably between 0.5 and 5 bar.

In one embodiment of the present invention, the at least one membrane is made of a material selected from the group comprising a sintered material, porous porcelain, synthetic polymers, like polyethylene, polypropylene, Teflon®, or modified polyethersulfon and mixtures thereof.

The solution of calcium hydrogen carbonate obtained after the least one membrane filtration unit, i.e. the filtrate, has preferably a pH in the range of 5.5 to 9, preferably in the range of 5.5 to 8, and most preferably in the range of 5.5 to 7.5.

Additionally or alternatively, the solution of calcium hydrogen carbonate obtained after the least one membrane filtration unit, i.e. the filtrate, has a calcium concentration from 50 to 1,000 mg/l, preferably from 100 to 800 mg/l, and most preferably from 500 to 700 mg/l as $CaCO_3$. It is thus appreciated that the solution of calcium hydrogen carbonate obtained after the at least one membrane filtration unit, i.e. the filtrate, is a concentrated solution of calcium hydrogen carbonate. According to another embodiment, the solution of calcium hydrogen carbonate obtained after the least one membrane filtration unit, i.e. the filtrate, has a magnesium concentration from 1 to 150 mg/l as $MgCO_3$, preferably from 2 to 100 mg/l as $MgCO_3$, and most preferably from 5 to 50 mg/l as $MgCO_3$.

According to still another embodiment of the present invention, the solution of calcium hydrogen carbonate obtained after the least one membrane filtration unit, i.e. the filtrate, has a turbidity value of lower than 5.0 NTU, preferably of lower than 2.0 NTU, and most preferably of lower than 1.0 NTU. For example, the solution of calcium hydrogen carbonate obtained after the least one membrane filtration unit, i.e. the filtrate, has a turbidity value of lower than 0.5 NTU.

According to even another embodiment of the present invention, the solution of calcium hydrogen carbonate obtained after the least one membrane filtration unit, i.e. the filtrate, has a conductivity value of higher than 200 $\mu$S/cm, preferably of higher than 300 $\mu$S/cm, more preferably of higher than 400 $\mu$S/cm or higher than 500 $\mu$S/cm.

It is one requirement of the present invention that the units of the installation, i.e. the at least one dosing unit, the multiple batch system and the at least one membrane filtration unit, are connected in circular communication, i.e. in a loop-like system, such that the residue obtained in the at least one membrane filtration unit is circulated back into the at least one dosing unit of the inventive installation. It is thus appreciated that at least one outlet of the at least one membrane filtration unit is connected to at least one inlet of the at least one dosing unit. For example, if the installation comprises one membrane filtration unit, one outlet of the membrane filtration unit is connected to one inlet of the at least one dosing unit. Alternatively, if the installation comprises two or more membrane filtration units, one outlet of each membrane filtration unit is independently connected to least one inlet, preferably one inlet, of the at least one dosing unit.

It is appreciated that the master batch line and the at least one slave batch line of the multiple batch system can be operated independently from each other. For example, the master batch line of the multiple batch system is used to prepare a solution of calcium hydrogen carbonate and the at least one slave batch line of the multiple batch system already contains prepared solution of calcium hydrogen carbonate. Alternatively, the master batch line of the multiple batch system already contains prepared solution of calcium hydrogen carbonate and the at least one slave batch line of the multiple batch system is used to prepare a solution of calcium hydrogen carbonate.

The advantage of the inventive installation is that a continuous preparation of a solution of calcium hydrogen carbonate is achieved which can be further used for the remineralization of water. In particular, the inventive installation allows the continuous preparation of a concentrated solution of calcium hydrogen carbonate having a reduced turbidity, i.e. a turbidity of < 0.5 NTU.

In view of the advantageous preparation of a solution of calcium hydrogen carbonate in the inventive installation, a further aspect of the present invention refers to the use of the installation for the preparation of a solution of calcium hydrogen carbonate. In particular, the present invention refers to the use of the installation for the continuous preparation of a solution of calcium hydrogen carbonate. It is preferred that the solution has a concentration of calcium hydrogen carbonate of from 50 to 1,000 mg/l, preferably from 100 to 800 mg/l, and most preferably from 500 to 700 mg/l.

It is preferred that the prepared solution of calcium hydrogen carbonate is used for the remineralization of water.

Another aspect of the present invention thus refers to the use of the solution of calcium hydrogen carbonate being prepared in the installation for the remineralization of water. It is preferred that the water to be remineralized is selected from drinking water, recreation water such as water for swimming pools, industrial water for process applications, irrigation water, or water for aquifer or well recharge.

The invention is explained in the following in more detail in connection with the Figures with reference to one embodiment of the multiple batch system.

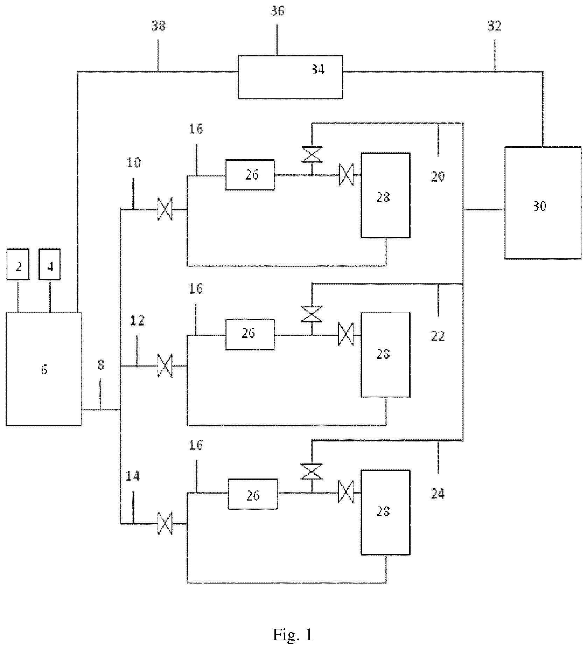

Fig. 1 shows an exemplified arrangement of an installation comprising at least one dosing unit, a multiple batch system and one membrane filtration unit. The installation comprises at least one dosing unit (6) being connected to a water supply (2) and a solid supply in the form of a storage container for solid material (4). The installation further comprises a slurry supply (8) connecting the at least one dosing unit (6) and each line of the multiple batch system, i.e. the master batch line (10), the first slave batch line (12) and each optional further slave batch line (14), and is used for injecting the aqueous suspension of calcium carbonate into the multiple batch system. The master batch line and each slave batch line, respectively, comprises in circular communication a gas dosing inlet (16), at least one mixing unit (26) and at least one tank (28). In order to introduce carbon dioxide into the aqueous suspension of calcium carbonate, the master batch line and each slave batch line, respectively, is equipped with a gas dosing inlet such as a $CO_2$ inlet (16). Furthermore, the dissolution of carbon dioxide in the aqueous suspension of calcium carbonate is facilitated by at least one mixing unit (26) provided in the master batch line and each slave batch line, respectively. For the further dissolution of calcium carbonate out of the aqueous suspension of calcium carbonate in the presence of carbon dioxide to form the solution of concentrated calcium hydrogen carbonate, the master batch line and each slave batch line, respectively, further comprises at least one tank (28). It is thus preferred that the master batch line and each slave batch line, respectively, is arranged in that the gas dosing inlet (16) is connected to at least one inlet of the at least one mixing unit (26) and at least one outlet of the at least one mixing unit (26) is connected to at least one inlet of the at least one tank (28). Furthermore, at least one outlet of the at least one tank (28) is connected to the gas dosing inlet (16).

It is one requirement that at least a part of the aqueous solution of calcium hydrogen carbonate can be discharged from the master batch line and each slave batch line, respectively. Accordingly, the master batch line and each slave batch line, respectively, is equipped with an outlet for discharging of at least a part of the solution of calcium carbonate and forwarding the solution of calcium carbonate through a supply (20, 22, 24) to the at least one membrane filtration unit (34). Said outlet is preferably located after the at least one mixing unit (26) of the master batch line and each slave batch line, respectively.

Furthermore, the solutions of calcium hydrogen carbonate, which are discharged from the master batch line and each slave batch line, respectively, can optionally be stored and collected in a storage tank (30) such that a combined product (32) is then further directed to the membrane filtration unit (34). Accordingly, the storage tank (30) is located between the multiple batch system and the membrane filtration unit (34).

It is appreciated that the single units of the installation, i.e. the at least one dosing unit (6), the multiple batch system (10, 12, 14) and the one membrane filtration unit (34) are provided in a circular communication. It is thus preferred that the installation is arranged in that at least one outlet of the at least one dosing unit (6) is connected to at least one inlet of the master batch line (10) and at least one outlet of the at least one dosing unit (6) is connected to at least one inlet of the one or more slave batch lines (12, 14). Furthermore, at least one outlet of the master batch line (10) is connected to at least one inlet of the membrane filtration unit (34) and at least one outlet of the one or more slave batch lines (12, 14) is connected to the same inlet of the membrane filtration unit (34). In order to provide a circular communication, it is further required that at least one outlet of the membrane filtration unit (34) is connected to at least one inlet of the at least one dosing unit (6) for recirculating back the residue retained in the at least one membrane filtration unit (34) into the at least one dosing unit (6).

Optionally, if a storage tank (30) is provided in the installation, at least one outlet of the master batch line (10) is connected to at least one inlet of the storage tank (30) and at least one outlet of the one or more slave batch lines (12, 14) is connected to the same inlet of the storage tank (30). In addition thereto, at least one inlet of the storage tank (30) is connected to at least one inlet of the membrane filtration unit (34).

It is appreciated that the membrane filtration unit (34) is connected to the at least one dosing unit (6) such that the residue retained in the membrane filtration unit (34) can be circulated back through a supply (38) into the at least one dosing unit (6) of the inventive installation.

The filtrate, i.e. the part of the solution of calcium hydrogen carbonate that has passed through the membrane filtration unit (34), can be discharged from the membrane filtration unit (34). Accordingly, the membrane filtration unit (34) is equipped with an outlet (36) for discharging of the solution of calcium carbonate.

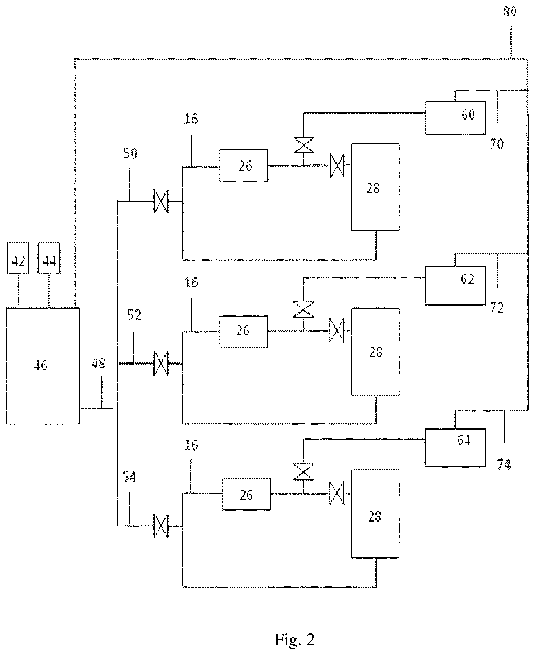

Fig. 2 shows an exemplified arrangement of an installation comprising at least one dosing unit, a multiple batch system and at least one membrane filtration unit, wherein the total number of membrane filtration units corresponds to the total number of master batch line and slave batch lines being part of the multiple batch system.

The installation comprises at least one dosing unit (46) being connected to a water supply (42) and a solid supply in the form of a storage container for solid material (44). The installation further comprises a slurry supply (48) connecting the at least one dosing unit (46) and each line of the multiple batch system, i.e. the master batch line (50), the first slave batch line (52) and each optional further slave batch line (54), and is used for injecting the aqueous suspension of calcium carbonate into the multiple batch system. The master batch line and each slave batch line, respectively, comprises in circular communication a gas dosing inlet (16), at least one mixing unit (26) and at least one tank (28). In order to introduce carbon dioxide into the aqueous suspension of calcium carbonate, the master batch line and each slave batch line, respectively, is equipped with a gas dosing inlet such as a $CO_2$ inlet (16). Furthermore, the dissolution of carbon dioxide in the aqueous suspension of calcium carbonate is facilitated by at least one mixing unit (26) provided in the master batch line and each slave batch line, respectively. For the further dissolution of calcium carbonate out of the aqueous suspension of calcium carbonate in the presence of carbon dioxide to form the solution of concentrated calcium hydrogen carbonate, the master batch line and each slave batch line, respectively, further comprises at least one tank (28). It is thus preferred that the master batch line and each slave batch line, respectively, is arranged in that the gas dosing inlet (16) is connected to at least one inlet of the at least one mixing unit (26) and at least one outlet of the at least one mixing unit (26) is connected to at least one inlet of the at least one tank (28). Furthermore, at least one outlet of the at least one tank (28) is connected to the gas dosing inlet (16).

It is one requirement that at least a part of the aqueous solution of calcium hydrogen carbonate can be discharged from the master batch line and each slave batch line, respectively. Accordingly, the master batch line and each slave batch line, respectively, is equipped with an outlet for discharging of at least a part of the solution of calcium carbonate and forwarding each solution of calcium carbonate through a supply to a different membrane filtration unit (60, 62, 64). Said outlet is preferably located after the at least one mixing unit (26) of the master batch line and each slave batch line, respectively.

It is appreciated that the single units of the installation, i.e. the at least one dosing unit (46), the multiple batch system (50, 52, 54) and the membrane filtration unit (60, 62, 64) are provided in a circular communication. It is thus preferred that the installation is arranged in that at least one outlet of the at least one dosing unit (46) is connected to at least one inlet of the master batch line (50) and at least one outlet of the at least one dosing unit (46) is connected to at least one inlet of the one or more slave batch lines (52, 54). Furthermore, at least one outlet of the master batch line (50) is connected to at least one inlet of the membrane filtration unit (60) and at least one outlet of the one or more slave batch lines (52, 54) is connected to a different membrane filtration unit (62, 64). In order to provide a circular communication, it is further required that at least one outlet of each membrane filtration unit (60, 62, 64) is connected to at least one inlet of the at least one dosing unit (46).

It is appreciated that each membrane filtration unit (60, 62, 64) is connected to the at least one dosing unit (46) such that the residue retained in each membrane filtration unit (60, 62, 64) can be circulated back through a supply (80) into the at least one dosing unit (46) of the inventive installation.

The filtrate, i.e. the part of the solution of calcium hydrogen carbonate that has passed through the membrane filtration units (60, 62, 64), can be independently from each other discharged from each membrane filtration unit (60, 62, 64). Accordingly, each membrane filtration unit (60, 62, 64) is equipped with an outlet (70, 72, 74) for discharging of the solution of calcium carbonate.

### Examples

The following examples present different ways of preparing aqueous solutions of calcium hydrogen carbonate, known as calcium bicarbonate, using the inventive installation. The obtained solution of calcium hydrogen carbonate is then used for the remineralization of soft water, which could be for instance natural soft water from ground water or surface water sources, desalinated water from reverse osmosis or distillation, rain water. The trials using this inventive installation were performed using two different grades of calcium carbonate as raw material for the preparation of the solutions of calcium hydrogen carbonate. Both $CaCO_3$ grades came from the same quarry producing marble products of very high purity with carbonates content above 99.5 wt.-%. The initial slurry aqueous concentration was either 500 mg/l or 1,000 mg/l as $CaCO_3$.

All trials were performed under room temperature, i.e. at a temperature of from 15 to 25 °C. It is to be noted that the RO (reverse osmosis) water provided at the beginning of each trial had a temperature of about room temperature, i.e. of from 15 to 25 °C.

The following Table 1 summarizes the different grades of calcium carbonate and the initial slurry concentrations used during the remineralization pilot trials performed by using the above described inventive installation.

Table 1

| Slurry | Slurry concentration [mg/l] | Samples[1] | $d_{50}$ [$\mu$m] |
|---|---|---|---|
| 1 | 500 | A | 20 |
| 2 | 1,000 | A | 20 |
| 3 | 1,000 | B | 3.5 |
| [1] All calcium carbonates used in the present invention are commercially available from Omya International AG, Switzerland. | | | |

The respective micronized calcium carbonate is poured in a funnel placed at the top of the dosing unit allowing a precise dosing of the powder into the dosing unit by means of a dosing screw connecting the bottom part of the funnel to the top of the dosing unit. The calcium carbonate suspension is prepared in the dosing unit by mixing the micronized calcium carbonate powder to RO water. The RO water was produced on-site using a reverse osmosis unit provided by Christ, BWT PERMAQ Pico, and had the average quality as outlined in the following Table 2.

Table 2

| | pH | Alkalinity (mg/l as $CaCO_3$) | Conductivity ($\mu$S/cm) | Turbidity (NTU) |
|---|---|---|---|---|
| RO water | 5.4 - 5.6 | 5 - 10 | 10-20 | < 0.1 |

The filling up of the dosing unit with RO water and the corresponding amount of micronized calcium carbonate is programmed and set according to the level switches placed inside the tank of the dosing unit. The initial solid content of the calcium carbonate suspension in the dosing unit was either 500 or 1,000 mg/l as $CaCO_3$ as described in Table 1. The RO water is added by means of a pump and introduced by a pipe connected to the top of the dosing unit, while the calcium carbonate powder is added to the dosing unit from the dosing screw placed at the top of the dosing unit. Both the RO water and the micronized calcium carbonate are dosed proportionally accordingly to a previously pre-programmed ratio allowing a constant solid content of the aqueous suspension of calcium carbonate in the dosing unit.

In the start-up procedure the dosing unit is filled up completely with the calcium carbonate suspension at a defined starting solid content. Then, the calcium carbonate suspension is pumped out of the dosing unit to feed one or more mixing units each having a volume of 100l of the multiple batch system. Different $CO_2$ stoichiometric ratios compared to the initial calcium carbonate solid content were tested in the inventive installation. The $CO_2$ stoichiometric ratios are the x-fold ratio of the $CaCO_3$ molar concentration of the aqueous starting slurry and varied from 1.7- to 5-fold ($CO_2$ was injected at a pressure of 2 bars). These tests were performed based on a batch mode with a time-controlled setting of 30 minutes. Then the solution resulting from the several batches contains the dissolved calcium hydrogen carbonate and some remaining undissolved $CaCO_3$ that were then pumped into a storage tank before being transferred further to the ultrafiltration unit. The filtrate released by the ultrafiltration unit consisted in the final product, i.e. the solution of calcium hydrogen carbonate, and the non-filtrate stream, i.e. the residue that was retained in the ultrafiltration unit, was recirculated back into the dosing unit as part of the inventive installation.

**Reference trial**

The reference trial was performed using slurry 1 (sample A, $d_{50}$ = 20 $\mu$m) as described in Table 1 at an initial slurry concentration of 500 mg/l as $CaCO_3$ on a batch mode with a time-controlled setting of 30 minutes, however without any filtration units. The $CO_2$ was injected at a pressure of 2 bars.

The process settings were as described above and summarized in the following Table 3.

Table 3

| Batch volume [1] | Batch time [h] | Batch flowrate [l/h] | Slurry concentration [mg/l] | $CO_2$ dosing rate [l/min] | $CO_2$ stoichiometric ratio [x-fold] | Filtration units |
|---|---|---|---|---|---|---|
| 100 | 0.5 | 200 | 500 | 4 | 5 | No |

The following Table 4 shows the average parameters measured for the aqueous calcium hydrogen carbonate solution that were obtained on several batches using the inventive installation without filtration units.

Table 4

| Trials # | Slurry | $CO_2$ stoichiometric ratio [x-fold] | Conductivity ($\mu$S/cm) | Turbidity (NTU) | pH | Alkalinity (mg/l as $CaCO_3$) |
|---|---|---|---|---|---|---|
| Ref. | 1 | 5 | 440 - 480 | 30-50 | 6.6 - 5.8 | 290 - 310 |

**Impact of the inventive installation comprising at least one filtration unit**

The inventive installation allows working at higher initial slurry concentration because of the circular communication, the residue retained in the membrane filtration unit is circulated back into the dosing unit.

Slurry 2 (sample A, $d_{50}$ = 20 $\mu$m) and slurry 3 (sample B, $d_{50}$ = 3.5 $\mu$m), both at an initial slurry concentration of 1,000 mg/l as $CaCO_3$, were used for the following trials using the batch mode option of the inventive installation with a time-controlled setting of 30 minutes combined with a filtration unit. The process settings are summarized in the following Table 5 which were similar to what was used for the reference trial above. However, the initial slurry concentration and the related $CO_2$ stoichiometric ratio to the $CaCO_3$ concentration differ. The $CO_2$ was injected at a pressure of 2 bars.

Table 5

| Batch volume [l] | Batch time [h] | Batch flowrate [l/h] | Slurry concentration [mg/l] | $CO_2$ dosing rate [l/min] | Filtration means | Filtrate flowrate [l/h] | Non-filtrate florate [l/h] |
|---|---|---|---|---|---|---|---|
| 100 | 0.5 | 200 | 1,000 | 4 | Yes | 50 | 150 |

The following Table 6 shows the average parameters measured for the aqueous calcium hydrogen carbonate solution that were obtained on several batches using the inventive installation.

Table 6

| Trials # | Slurry | $CO_2$ stoichiometric ratio [x-fold] | Conductivity ($\mu$S/cm) | Turbidity (NTU) | pH | Alkalinity (mg/l as $CaCO_3$) |
|---|---|---|---|---|---|---|
| 1 | 2 | 1.7 | 590-630 | < 0.1 | 6.0 | 310 - 340 |
| 2 | 3 | 1.7 | | < 0.1 | 6.1-6.3 | 480 - 540 |
| 3 | 2 | 2.5 | 580-720 | < 0.1 | 5.9 - 6.1 | 400 - 410 |
| 4 | 3 | 2.5 | 950 | < 0.1 | 6.2 - 6.3 | 540-550 |

The results outlined in Table 6 show that the inventive installation allows reaching higher conductivity and alkalinity levels by using a lower $CO_2$ stoichiometric ratio compared to the reference trial. In addition thereto, due to the incorporation of at least one membrane filtration unit within the inventive installation, the resulting calcium hydrogen carbonate solution has very low turbidity levels. Furthermore, the use of a finer calcium carbonate product in the inventive installation, i.e. slurry 3 (sample B, $d_{50}$ = 3.5 $\mu$m), results in higher conductivity and alkalinity levels compared to a coarser calcium carbonate product, such as slurry 2 (sample A, $d_{50}$ = 20 $\mu$m) for both $CO_2$ stoichiometric ratios. It can be further gathered for both of the tested slurries that an increase of the $CO_2$ stoichiometric ratio induces an increase in the conductivity and alkalinity measured for the obtained calcium hydrogen carbonate solution.

**Claims**

1. Installation for the preparation of a solution of calcium hydrogen carbonate, the installation comprising in circular communication

   a) at least one dosing unit (6) provided with at least one inlet and at least one outlet, wherein the at least one dosing unit (6) is connected to at least one membrane filtration unit (34) such that the residue obtained in the at least one membrane filtration unit (34) is circulated back into the at least one dosing unit (6), and wherein at least one outlet of the at least one dosing unit (6) is connected to at least one inlet of the master batch line (10) and at least one outlet of the at least one dosing unit (6) is connected to at least one inlet of the at least one slave batch line (12, 14),
   b) a multiple batch system comprising

      x) a master batch line (10) provided with at least one inlet and at least one outlet, the master batch line (10) comprising in circular communication

         i) at least one gas dosing inlet (16),
         ii) at least one mixing unit (26) provided with at least one inlet and at least one outlet, and
         iii) at least one tank (28) provided with at least one inlet and at least one outlet, and

      xi) at least one slave batch line (12, 14) provided with at least one inlet and at least one outlet, the at least one slave batch line (12, 14) comprising in circular communication

         i) at least one gas dosing inlet (16),
         ii) at least one mixing unit (26) provided with at least one inlet and at least one outlet, and
         iii) at least one tank (28) provided with at least one inlet and at least one outlet,

   wherein at least one outlet of the master batch line (10) is connected to at least one inlet of the at least one membrane filtration unit (34) and at least one outlet of the at least one slave batch line (12, 14) is connected to at least one inlet of the at least one membrane filtration unit (34), and
   c) at least one membrane filtration unit (34) provided with at least one inlet and at least one outlet, wherein the at least one membrane filtration unit (34) is a cross flow membrane microfiltration device and/or a cross flow ultrafiltration device.

2. Installation according to claim 1, wherein the at least one dosing unit (6) is connected to a water supply (2) and a storage container (4) for solid material.

3. Installation according to claim 1, wherein at least one outlet of the master batch line (10) and at least one outlet of the at least one slave batch line (12, 14)are independently connected to at least one inlet of the membrane filtration unit (34).

4. Installation according to any one of claims 1 or 2, wherein the installation comprises at least two membrane filtration units (34) or the total number of membrane filtration units (34) corresponds to the total number of master batch line (10) and slave batch lines (12, 14) being part of the multiple batch system.

5. Installation according to claim 4, wherein the master batch line (10) and each of the at least one slave batch lines (12, 14) are independently connected to a different membrane filtration unit (34).

**6.** Installation according to any one of the previous claims, wherein the at least one gas dosing inlet (16) of the master batch line is connected to at least one inlet of the at least one mixing unit (26) of the master batch line and/or the at least one gas dosing inlet (16) of the at least one slave batch line is connected to at least one inlet of the at least one mixing unit (26) of the at least one slave batch line.

**7.** Installation according to any one of the previous claims, wherein at least one outlet of the at least one mixing unit (26) of the master batch line is connected to at least one inlet of the at least one tank (28) of the master batch line and/or at least one outlet of the at least one mixing unit (26) of the at least one slave batch line is connected to at least one inlet of the at least one tank (28) of the at least one slave batch line.

**8.** Installation according to any one of the previous claims, wherein at least one outlet of the at least one tank (28) of the master batch line is connected to the at least one gas dosing inlet (16) of the master batch line and/or at least one outlet of the at least one tank (28) of the at least one slave batch line is connected to at least one gas dosing inlet (16) of the at least one slave batch line.

**9.** Installation according to any one of the previous claims, wherein at least one outlet is located after the at least one mixing unit (26) of the master batch line and at least one outlet is located after the at least one mixing unit (26) of the at least one slave batch line.

**10.** Installation according to claim 9, wherein the at least one outlet of the master batch line (10) and the at least one outlet of the at least one slave batch line (12, 14) are independently connected to at least one inlet of the at least one membrane filtration unit (34).

**11.** Use of an installation according to any one of claims 1 to 10 for the preparation of a solution of calcium hydrogen carbonate.

**12.** Use of an installation according to any one of claims 1 to 10 for the remineralization of water.

**13.** Use according to claim 12, wherein the water to be remineralized is selected from drinking water, recreation water such as water for swimming pools, industrial water for process applications, irrigation water, or water for aquifer or well recharge.

**Patentansprüche**

**1.** Anlage zur Herstellung einer Calciumhydrogencarbonatlösung, wobei die Anlage in ringförmiger Kommunikation umfasst

a) wenigstens eine Dosiereinheit (6), die mit wenigstens einem Einlass und wenigstens einem Auslass versehen ist, wobei die wenigstens eine Dosiereinheit (6) mit wenigstens einer Membranfiltrationseinheit (34) so versehen ist, dass der in der wenigstens einen Membranfiltrationseinheit (34) erhaltene Rückstand zurück in die wenigstens eine Dosiereinheit (6) zirkuliert wird, und wobei der wenigstens eine Auslass der wenigstens einen Dosiereinheit (6) mit wenigstens einem Einlass der Hauptchargenbaureihe (10) verbunden ist, und wenigstens ein Auslass der wenigstens einen Dosiereinheit (6) ist mit wenigstens einem Einlass der wenigstens einen Nebenchargenbaureihe (12, 14) verbunden,
b) ein Mehrchargensystem, umfassend

x) eine Hauptchargenbaureihe (10), versehen mit wenigstens einem Einlass und wenigstens einem Auslass, wobei die Hauptchargenbaureihe (10) in ringförmiger Kommunikation umfasst

i) wenigstens einen Gasdosiereinlass (16),
ii) wenigstens eine Mischeinheit (26), versehen mit wenigstens einem Einlass und wenigstens einem Auslass, und
iii) wenigstens ein Tank (28), versehen mit wenigstens einem Einlass und wenigstens einem Auslass, und

xi) wenigstens eine Nebenchargenbaureihe (12, 14), versehen mit wenigstens einem Einlass und wenigstens einem Auslass, wobei die wenigstens eine Nebenchargenbaureihe (12, 14) in ringförmiger Kommunikation umfasst

i) wenigstens einen Gasdosiereinlass (16),
ii) wenigstens eine Mischeinheit (26), versehen mit wenigstens einem Einlass und wenigstens einem Auslass, und
iii) wenigstens ein Tank (28), versehen mit wenigstens einem Einlass und wenigstens einem Auslass,

wobei der wenigstens eine Auslass der Hauptchargenbaureihe (10) mit wenigstens einem Einlass der wenigstens einen Membranfiltrationseinheit (34) verbunden ist, und wenigstens ein Auslass der Nebenchargenbaureihe (12, 14) ist mit wenigstens einem Einlass der Membranfiltrationseinheit (34) verbunden, und
c) wenigstens eine Membranfiltrationseinheit (34), versehen mit wenigstens einem Einlass und wenigstens einem Auslass, wobei die wenigstens eine Membranfiltrationseinheit (34) eine Querströmungsmembranmikrofiltrationsvorrichtung und/oder eine Querströmungsultrafiltrationsvorrichtung ist.

2. Anlage nach Anspruch 1, bei der die wenigstens eine Dosiereinheit (6) verbunden ist mit einer Wasserzufuhr (2) und einem Lagerbehälter (4) für Feststoffmaterial.

3. Anlage nach Anspruch 1, bei der der wenigstens eine Auslass der Hauptchargenbaureihe (10) und wenigstens ein Auslass der Nebenchargenbaureihe (12, 14) unabhängig voneinander mit wenigstens einem Einlass der Membranfiltrationseinheit (34) verbunden sind.

4. Anlage nach einem der Ansprüche 1 oder 2, bei der die Anlage wenigstens zwei Membranfiltrationseinheiten (34) umfasst, oder die Gesamtanzahl der Membranfiltrationseinheiten (34) entspricht der Gesamtanzahl der Hauptchargenbaureihe (10) und der Nebenchargenbaureihen (12, 14), die Teil des Mehrchargensystems sind.

5. Anlage nach Anspruch 4, bei der die Hauptchargenbaureihe (10) und jede der wenigstens einen Nebenchargenbaureihe (12, 14) unabhängig voneinander mit einer anderen Membranfiltrationseinheit (34) verbunden sind.

6. Anlage nach einem der vorhergehenden Ansprüche, bei der der wenigstens eine Gasdosiereinlass (16) der Hauptchargenbaureihe mit wenigstens einem Einlass der wenigstens einen Mischeinheit (26) der Hauptchargenbaureihe verbunden ist, und/oder der wenigstens eine Gasdosiereinlass (16) der wenigstens einen Nebenchargenbaureihe ist mit wenigstens einem Einlass der wenigstens einen Mischeinheit (26) der wenigstens einen Nebenchargenbaureihe verbunden.

7. Anlage nach einem der vorhergehenden Ansprüche, bei der wenigstens ein Auslass der wenigstens einen Mischeinheit (26) der Hauptchargenbaureihe mit wenigstens einem Einlass von wenigstens einem Tank (28) der Hauptchargenbaureihe verbunden ist, und/oder wenigstens ein Auslass der wenigstens einen Mischeinheit (26) der wenigstens einen Nebenchargenbaureihe ist mit wenigstens einem Einlass von wenigstens einem Tank (28) der wenigstens einen Nebenchargenbaureihe verbunden.

8. Anlage nach einem der vorhergehenden Ansprüche, bei der wenigstens ein Auslass des wenigstens einen Tanks (28) der Hauptchargenbaureihe mit dem wenigstens einen Gasdosiereinlass (16) der Hauptchargenbaureihe verbunden ist, und/oder wenigstens ein Auslass des wenigstens einen Tanks (28) der wenigstens einen Nebenchargenbaureihe ist mit dem wenigstens einen Gasdosiereinlass (16) der der wenigstens einen Nebenchargenbaureihe verbunden.

9. Anlage nach einem der vorhergehenden Ansprüche, bei der wenigstens ein Auslass nach der wenigstens einen Mischeinheit (26) der Hauptchargenbaureihe angeordnet ist, und wenigstens ein Auslass ist nach der wenigstens einen Mischeinheit (26) der wenigstens einen Nebenchargenbaureihe angeordnet.

10. Anlage nach Anspruch 9, bei der der wenigstens eine Auslass der Hauptchargenbaureihe (10) und der wenigstens eine Auslass der wenigstens einen Nebenchargenbaureihe (12, 14) unabhängig voneinander mit wenigstens einem Einlass der wenigstens einen Membranfiltrationseinheit (34) verbunden sind.

11. Verwendung einer Anlage nach einem der Ansprüche 1 bis 10 zur Herstellung einer Calciumhydrogencarbonatlösung.

12. Verwendung einer Anlage nach einem der Ansprüche 1 bis 10 zur Remineralisierung von Wasser.

**13.** Verwendung nach Anspruch 12, bei der das zu remineralisierende Wasser ausgewählt ist aus Trinkwasser, Freizeitwasser, wie Wasser für Schwimmbecken, Industriewasser für Verfahrensanwendungen, Bewässerungswasser, oder Wasser für Grundwasserleiter oder Brunnengrundwasseranreicherung.

**Revendications**

**1.** Installation pour la préparation d'une solution d'hydrogénocarbonate de calcium, l'installation comprenant en communication circulaire

a) au moins une unité de dosage (6) dotée d'au moins une entrée et d'au moins une sortie, l'au moins une unité de dosage (6) étant raccordée à au moins une unité de filtration sur membrane (34) de telle sorte que le résidu obtenu dans l'au moins une unité de filtration sur membrane (34) est recyclé dans l'au moins une unité de dosage (6), et au moins une sortie de l'au moins une unité de dosage (6) étant raccordée à au moins une entrée de la ligne de mélange maître (10) et au moins une sortie de l'au moins une unité de dosage (6) étant raccordée à au moins une entrée de l'au moins une ligne de mélange secondaire (12, 14),
b) un système de mélange multiple comprenant

x) une ligne de mélange maître (10) dotée d'au moins une entrée et d'au moins une sortie, la ligne de mélange maître (10) comprenant en communication circulaire

i) au moins une entrée de dosage de gaz (16),
ii) au moins une unité de mélange (26) dotée d'au moins une entrée et d'au moins une sortie, et
iii) au moins une cuve (28) dotée d'au moins une entrée et d'au moins une sortie, et

xi) au moins une ligne de mélange secondaire (12, 14) dotée d'au moins une entrée et d'au moins une sortie, l'au moins une ligne de mélange secondaire (12, 14) comprenant en communication circulaire

i) au moins une entrée de dosage de gaz (16),
ii) au moins une unité de mélange (26) dotée d'au moins une entrée et d'au moins une sortie, et
iii) au moins une cuve (28) dotée d'au moins une entrée et d'au moins une sortie,

dans laquelle au moins une sortie de la ligne de mélange maître (10) est raccordée à au moins une entrée de l'au moins une unité de filtration sur membrane (34) et au moins une sortie de la ligne de mélange secondaire (12, 14) est raccordée à au moins une entrée de l'au moins une unité de filtration sur membrane (34), et

c) au moins une unité de filtration sur membrane (34) dotée d'au moins une entrée et d'au moins une sortie, l'unité de filtration sur membrane (34) étant un dispositif de microfiltration sur membrane à écoulement croisé et/ou un dispositif d'ultrafiltration à écoulement croisé.

**2.** Installation selon la revendication 1, dans laquelle l'au moins une unité de dosage (6) est raccordée à une alimentation d'eau (2) et à un contenant de stockage (4) pour une matière solide.

**3.** Installation selon la revendication 1, dans laquelle au moins une sortie de la ligne de mélange maître (10) et au moins une sortie de l'au moins une ligne de mélange secondaire (12, 14) sont indépendamment raccordées à au moins une entrée de l'unité de filtration sur membrane (34).

**4.** Installation selon la revendication 1 ou 2, dans laquelle l'installation comprend au moins deux unités de filtration sur membrane (34) ou le nombre total d'unités de filtration sur membrane (34) correspond au nombre total de la ligne de mélange maître (10) et des lignes de mélange secondaire (12, 14) qui font partie du système de mélange multiple.

**5.** Installation selon la revendication 4, dans laquelle la ligne de mélange maître (10) et la ou chacune des lignes de mélange secondaire (12, 14) sont indépendamment raccordées à différentes unités de filtration sur membrane (34).

**6.** Installation selon l'une quelconque des revendications précédentes, dans laquelle l'au moins une entrée de dosage de gaz (16) de la ligne de mélange maître est raccordée à au moins une entrée de l'au moins une unité de mélange (26) de la ligne de mélange maître et/ou l'au moins une entrée de dosage de gaz (16) de l'au moins une ligne de mélange secondaire est raccordée à au moins une entrée de l'au moins une unité de mélange (26) de l'au moins une ligne de mélange secondaire.

7. Installation selon l'une quelconque des revendications précédentes, dans laquelle au moins une sortie de l'au moins une unité de mélange (26) de la ligne de mélange maître est raccordée à au moins une entrée de l'au moins une cuve (28) de la ligne de mélange maître et/ou au moins une sortie de l'au moins une unité de mélange (26) de l'au moins une ligne de mélange secondaire est raccordée à au moins une entrée de l'au moins une cuve (28) de l'au moins une ligne de mélange secondaire.

8. Installation selon l'une quelconque des revendications précédentes, dans laquelle au moins une sortie de l'au moins une cuve (28) de la ligne de mélange maître est raccordée à l'au moins une entrée de dosage de gaz (16) de la ligne de mélange maître et/ou au moins une sortie de l'au moins une cuve (28) de l'au moins une ligne de mélange secondaire est raccordée à au moins une entrée de dosage de gaz (16) de l'au moins une ligne de mélange secondaire.

9. Installation selon l'une quelconque des revendications précédentes, dans laquelle au moins une sortie est située après l'au moins une unité de mélange (26) de la ligne de mélange maître et au moins une sortie est située après l'au moins une unité de mélange (26) de l'au moins une ligne de mélange secondaire.

10. Installation selon la revendication 9, dans laquelle l'au moins une sortie de la ligne de mélange maître (10) et l'au moins une sortie de l'au moins une ligne de mélange secondaire (12, 14) sont indépendamment raccordées à au moins une entrée de l'au moins une unité de filtration sur membrane (34).

11. Utilisation d'une installation selon l'une quelconque des revendications 1 à 10, pour la préparation d'une solution d'hydrogénocarbonate de calcium.

12. Utilisation d'une installation selon l'une quelconque des revendications 1 à 10, pour la reminéralisation de l'eau.

13. Utilisation selon la revendication 12, dans laquelle l'eau à reminéraliser est choisie parmi l'eau potable, l'eau de loisir telle que l'eau pour piscines, l'eau industrielle pour des applications de traitement, l'eau d'irrigation ou l'eau pour l'alimentation d'un aquifère ou d'un puits.

Fig. 1

Fig. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7374694 B
- EP 0520826 A
- US 5914046 A
- US 7771599 B
- WO 2012020056 A1
- WO 2010023742 A2
- WO 2012113957 A1

- US 20110217227 A
- EP 1975310 A
- EP 1982759 A
- EP 1974807 A
- EP 1974806 A
- WO 0039222 A
- US 20040020410 A1